# EUROPEAN PATENT APPLICATION

(11) **EP 2 472 881 A2**
(43) Date of publication of application: **04.07.2012**
(21) Application number: 11188786.5
(22) Date of filing: 11.11.2011
(51) Int. Cl.: H04N 13/00

(54) **Method for driving stereoscopic display apparatus and stereoscopic display apparatus**

(30) Priority: 28.12.2010 JP 2010293038
(71) Applicant: Sony Corporation, Tokyo 108-0075 (JP)
(72) Inventor: Sato, Yoshihisa, Minato-ku, Tokyo 108-0075 (JP)
(74) Representative: Robinson, Nigel Alexander Julian

(57) **Abstract**

A method for driving a stereoscopic display apparatus includes: opening or closing a plurality of light barriers grouped into a plurality of barrier groups at different timings among the barrier groups; and performing display operation based on multi-viewpoint images in synchronization with the open/close operation of the light barriers in each of the barrier groups, wherein the display operation is performed based on the multi-viewpoint images grouped into a plurality of sets different from one another in a cyclic period in which the light barriers in the plurality of barrier groups are sequentially opened and closed.

## Description

The present disclosure relates to a method for driving a stereoscopic display apparatus that allows stereoscopic display based on a parallax barrier and a stereoscopic display apparatus.

A display apparatus that allows stereoscopic display (stereoscopic display apparatus) has recently drawn attention. In stereoscopic display, video images for the right eye and video images for the left eye between which parallax is present (in which viewpoints are different) are displayed, and a viewer who looks at the right and left video images with the right and left eyes respectively can recognize the images as stereoscopic video images that give a sense of depth. There is also a display apparatus having been so developed that three or more video images among which parallax is present are displayed to provide the viewer with more natural stereoscopic video images.

Such stereoscopic display apparatus are roughly classified into those that need dedicated eyeglasses and those that need no dedicated eyeglasses (naked-eye stereoscopic display apparatus). Dedicated eyeglasses are cumbersome for the viewer, and stereoscopic display apparatus that need no dedicated eyeglasses are desired. Examples of the display apparatus that need no dedicated eyeglasses employ a lenticular lens or a parallax barrier. In the two types of display apparatus described above, a plurality of video images among which parallax is present (viewpoint video images) are simultaneously displayed, and the plurality of video images are differently recognized depending on the relative positional (angular) relationship between the display apparatus and the viewpoint of the viewer.

When such a display apparatus displays a plurality of viewpoint video images, effective video image resolution is lower than the resolution of the display apparatus itself, such as a liquid crystal display apparatus, that is, the effective resolution is the resolution of the display apparatus divided by the number of viewpoints, disadvantageously resulting in decrease in image quality. To solve the problem described above, a variety of studies have been conducted. For example, JP-A-2009-104105 proposes a parallax barrier-based display apparatus that switches the state of each liquid crystal barrier disposed across a display screen between a light transmitting state (open state) and a light blocking state (closed state) in a time division manner. In the display apparatus, the liquid crystal barriers are grouped into two barrier groups and the state of each of the two barrier groups is alternately switched in a single frame so that left-right (LR) video images and right-left (RL) video images are displayed in a time division manner in synchronization with the switching operation, whereby the resolution is improved.

In the parallax barrier-based display apparatus described above, however, it is typically difficult to increase the resolution. Specifically, for example, when the display apparatus is a liquid crystal display apparatus, a user could feel that displayed images flicker and hence image quality is degraded, as will be described below.

In a liquid crystal display apparatus, liquid crystal molecules rotate in accordance with the voltage applied thereto so that the brightness of a displayed image is modulated. Since the liquid crystal molecules typically rotate slowly, there is a response period of, for example, about 3 [msec] from the time when a video image signal is actually applied to the time when the liquid crystal display apparatus displays an image. That is, the response period limits the cycle at which the liquid crystal display apparatus rewrites displayed video images or it is difficult to shorten the rewriting cycle.

To increase the resolution of a parallax barrier-based display apparatus, a greater number of barrier groups each of which is formed of liquid crystal barriers can be provided, and the state of each of the barrier groups is switched. In this case, the number of video images displayed in a time division manner in synchronization with the open/close operation of the liquid crystal barriers also increases. Since it is difficult to shorten the cycle at which displayed video images are rewritten as described above, the period corresponding to a single frame disadvantageously lengthens as the number of displayed video images (in other words, the number of barrier groups) increases. When the single-frame period is longer than, for example, 16.6 [msec] (=1/60 [Hz]) or 20 [msec] (=1/50 [Hz]) , the viewer could feel that displayed video images flicker, which is a well known phenomenon. In this case, the viewer feels as if the image quality were degraded.

In view of the problem described above, it is desirable not only to provide a method for driving a stereoscopic display apparatus that prevents the viewer from feeling that displayed images flicker while increasing the resolution but also to provide a stereoscopic display apparatus.

An embodiment of the present disclosure is directed to a method for driving a stereoscopic display apparatus including: opening or closing a plurality of light barriers grouped into a plurality of barrier groups at different timings among the barrier groups; and performing display operation based on multi-viewpoint images in synchronization with the open/close operation of the light barriers in each of the barrier groups. The display operation is performed based on the multi-viewpoint images grouped into a plurality of sets different from one another in a cyclic period in which the light barriers in the plurality of barrier groups are sequentially opened and closed.

Another embodiment of the present disclosure is directed to a method for driving a stereoscopic display apparatus including: opening or closing a plurality of light barriers grouped into a plurality of barrier groups at different timings among the barrier groups; and performing display operation based on multi-viewpoint images in synchronization with the open/close operation of the light barriers in each of the barrier groups. The display operation is performed based on multi-viewpoint images so configured that display in portions corresponding to the light barriers that belong to at least one of the barrier groups differs from display in portions corresponding to the light barriers that belong to the other barrier groups in a cyclic period in which the light barriers in the plurality of barrier groups are sequentially opened and closed.

Still another embodiment of the present disclosure is directed to a stereoscopic display apparatus including a light barrier unit, a barrier driver, and a display unit. The light barrier unit includes a plurality of light barriers grouped into a plurality of barrier groups. The barrier driver opens or closes the plurality of light barriers at different timings among the barrier groups. The display unit performs display operation based on a plurality of sets of multi-viewpoint images different from one another in a cyclic period in which the light barriers in the plurality of barrier groups are sequentially opened and closed.

In the methods for driving a stereoscopic display apparatus and the stereoscopic display apparatus according to the embodiments of the present disclosure, display operation is performed based on multi-viewpoint images in synchronization with open/close operation of the light barriers in each of the barrier groups. In this process, the display operation is performed based on the multi-viewpoint images grouped into a plurality of sets different from one another in the cyclic period.

In the method for driving a stereoscopic display apparatus according to the embodiment of the present disclosure, for example, the plurality of barrier groups may be formed of four barrier groups. In this case, the display operation is preferably performed based, for example, on first and second sets of multi-viewpoint images in the cyclic period. Further, for example, the plurality of barrier groups may be formed of three barrier groups. In this case, the display operation is preferably performed based, for example, on first and second sets of multi-viewpoint images in a first cyclic period, and performed based, for example, on second and third sets of multi-viewpoint images in a subsequent second cyclic period. Further, for example, the plurality of barrier groups may be formed of two barrier groups. In this case, the display operation is preferably performed based on first and second sets of multi-viewpoint images in the cyclic period.

Further, for example, the plurality of light barriers may be so arranged that the plurality of barrier groups appear cyclically in a predetermined direction, and the display operation may be performed based on each set of multi-viewpoint images in synchronization with barrier groups to which light barriers that are adjacent to each other belong. Further, for example, the plurality of light barriers may be so arranged that the plurality of barrier groups appear cyclically in a predetermined direction, and the display operation may be performed based on each set of multi-viewpoint images in synchronization with barrier groups to which light barriers that are adjacent to each other belong.

Further, for example, in the display operation, a plurality of series of combined images corresponding to the barrier groups may be generated and displayed based on the plurality of sets of multi-viewpoint images in the cyclic period.

In the stereoscopic display apparatus according to the embodiment of the present disclosure, the display unit may be a liquid crystal display unit, and the stereoscopic display apparatus may further includes a backlight. In this case, for example, the liquid crystal display unit may be disposed between the backlight and the light barrier unit, or the light barrier unit may be disposed between the backlight and the liquid crystal display unit.

In the methods for driving a stereoscopic display apparatus and the stereoscopic display apparatus according to the embodiments of the present disclosure, since the display operation is performed based on a plurality of sets of multi-viewpoint images different from one another in a cyclic period, a viewer will less likely have a sense of flickering while benefiting from increased resolution.

Further particular and preferred aspects of the present invention are set out in the accompanying independent and dependent claims. Features of the dependent claims may be combined with features of the independent claims as appropriate, and in combinations other than those explicitly set out in the claims.

Embodiments of the invention will now be described, by way of example only, with reference to the accompanying drawings in which:
Fig. 1 is a block diagram showing an example of the configuration of a stereoscopic display apparatus according to an embodiment of the present disclosure;
Figs. 2A and 2B are descriptive views showing an example of the configuration of the stereoscopic display apparatus according to a first embodiment;
Fig. 3 is a block diagram showing an example of the configuration of a display driver and a display unit according to the first embodiment;
Fig. 4 is a descriptive view showing an example of the configuration of the display unit according to the first embodiment;
Fig. 5 is a circuit diagram showing an example of the configuration of a pixel according to the first embodiment;
Figs. 6A and 6B are descriptive views showing an example of the configuration of a liquid crystal barrier unit according to the first embodiment;
Fig. 7 is a descriptive view for describing groups of open/close units according to the first embodiment;
Figs. 8A to 8D diagrammatically show an example of how the display unit and the liquid crystal barrier unit according to the first embodiment operate;
Figs. 9A to 9G are timing charts showing an example of how the stereoscopic display apparatus according to the first embodiment operates;
Fig. 10 diagrammatically shows an example of how the display unit and the liquid crystal barrier unit according to the first embodiment display video images stereoscopically;
Figs. 11A to 11C diagrammatically show visually recognized images according to the first embodiment;
Fig. 12 is a descriptive view showing pixel information layouts in frame images according to the first embodiment;
Figs. 13A and 13B are descriptive views showing pixel information layouts in combined frame images according to the first embodiment;
Fig. 14 is a descriptive view showing pixel information layouts in other frame images according to the first embodiment;
Figs. 15A and 15B are descriptive views showing pixel information layouts in other combined frame images according to the first embodiment;
Fig. 16 is a descriptive view showing a pixel information layout in a visually recognized image according to the first embodiment;
Figs. 17A to 17G are timing charts showing an example of how a stereoscopic display apparatus according to Comparative Example of the first embodiment operates;
Figs. 18A to 18G are timing charts showing an example of how a stereoscopic display apparatus according to a variation of the first embodiment operates;
Fig. 19 is a descriptive view showing a pixel information layout in a visually recognized image according to a variation of the first embodiment;
Figs. 20A to 20C diagrammatically show a visually recognized image according to the variation of the first embodiment;
Fig. 21 is a descriptive view for describing groups of open/close units according to a second embodiment;
Figs. 22A to 22C diagrammatically show an example of how a display unit and a liquid crystal barrier unit according to the second embodiment operate;
Figs. 23A to 23F are timing charts showing an example of how a stereoscopic display apparatus according to the second embodiment operates;
Figs. 24A and 24B are descriptive views showing pixel information layouts in combined frame images according to the second embodiment;
Figs. 25A and 25B are descriptive views showing pixel information layouts in other combined frame images according to the second embodiment;
Figs. 26A and 26B are descriptive views showing pixel information layouts in other combined frame images according to the second embodiment;
Figs. 27A and 27B are descriptive views showing pixel information layouts in visually recognized images according to a variation of the first embodiment;
Figs. 28A to 28E are timing charts showing an example of how a stereoscopic display apparatus according to a variation operates;
Figs. 29A and 29B are plan views showing examples of the configuration of liquid crystal barriers according to other variations;
Figs. 30A and 30B are descriptive views showing an example of the configuration of a stereoscopic display apparatus according to another variation;
Fig. 31 diagrammatically shows an example of how the stereoscopic display apparatus according to the variation operates;
Figs. 32A to 32H are timing charts showing an example of how a stereoscopic display apparatus according to another variation operates;
Figs. 33A and 33B are descriptive views showing an example of the configuration of a backlight according to another variation;
Fig. 34 is a descriptive view for describing areas in a display unit according to the variation;
Figs. 35A to 35H are timing charts showing an example of how a stereoscopic display apparatus according to the variation operates;
Fig. 36 is a descriptive view showing an example of the configuration of a liquid crystal barrier unit according to the variation;
Fig. 37 is a descriptive view for describing groups of open/close units according to the variation; and
Figs. 38A to 38H are timing charts based on which a stereoscopic display apparatus according to the variation operates.

Embodiments of the present disclosure will be described below in detail with reference to the drawings. The description will be made in the following order.
1. First Embodiment
2. Second Embodiment

### <1. First Embodiment>

### [Example of configuration]

### (Example of overall configuration)

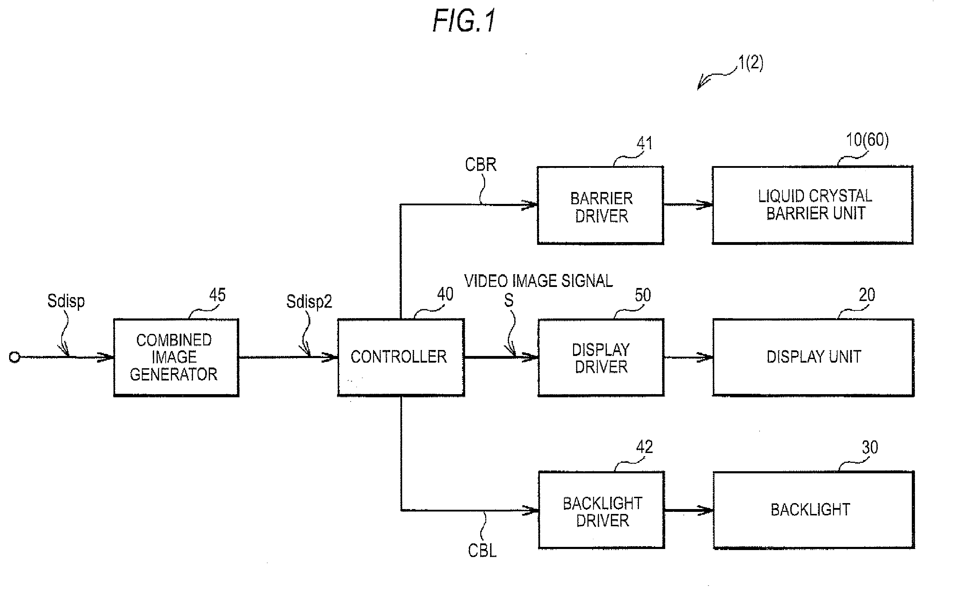

Fig. 1 shows an example of the configuration of a stereoscopic display apparatus according to a first embodiment of the present disclosure. A stereoscopic display apparatus 1 is a display apparatus based on parallax barriers grouped into four barrier groups. First and second methods for driving a stereoscopic display apparatus according to the embodiments of the present disclosure will also be described below because the methods are embodied in the embodiments.

The stereoscopic display apparatus 1 includes a combined image generator 45, a controller 40, a display driver 50, a display unit 20, a backlight driver 42, a backlight 30, a barrier driver 41, and a liquid crystal barrier unit 10.

The combined image generator 45 performs a combining process based on an externally supplied video image signal Sdisp to produce a video image signal Sdisp2. Specifically, when the stereoscopic display apparatus 1 displays video images stereoscopically, the combined image generator 45 generates combined frame images FA to FD by performing a combining process (which will be described later) based on two sets of frame images P1 to P8 and Q1 to Q8, which are different from each other, out of a plurality of (eight in this example) viewpoint video images contained in the video image signal Sdisp and generates a video image signal Sdisp2 formed of video image signals SA to SD containing the combined frame signals FA to FD.

The controller 40 is a circuit that controls the display driver 50, the backlight driver 42, and the barrier driver 41 based on the video image signal Vdisp2 to operate drivers in synchronization with one another. Specifically, when the stereoscopic display apparatus 1 displays video images stereoscopically, the controller 40 supplies the display driver 50 with the video image signals SA to SD based on the video image signal Vdisp2, supplies the backlight driver 42 with a backlight control signal CBL, and supplies the barrier driver 41 with a barrier control signal CBR to control the drivers, as will be described below.

The display driver 50 drives the display unit 20 based on the video image signals S supplied from the controller 40. The display unit 20 performs line sequential scanning to display an image. In this example, an image is displayed by driving a liquid crystal display device to modulate light emitted from the backlight 30.

The backlight driver 42 drives the backlight 30 based on the backlight control signal CBL supplied from the controller 40. The backlight 30 emits light in the form of surface emission to the display unit 20. The backlight 30, in which light emitted from light emitting diodes (LEDs) or cold cathode fluorescent lamps (CCFLs) is diffused through a diffuser or any other suitable optical component, emits light substantially uniformly in the form of surface emission.

The barrier driver 41 drives the liquid crystal barrier unit 10 based on the barrier control signal CBR supplied from the controller 40. The liquid crystal barrier unit 10 includes a plurality of open/close units 11 and 12 (which will be described later) formed of a liquid crystal material and has a function of transmitting or blocking light having exited from the backlight 30 and passed through the display unit 20.

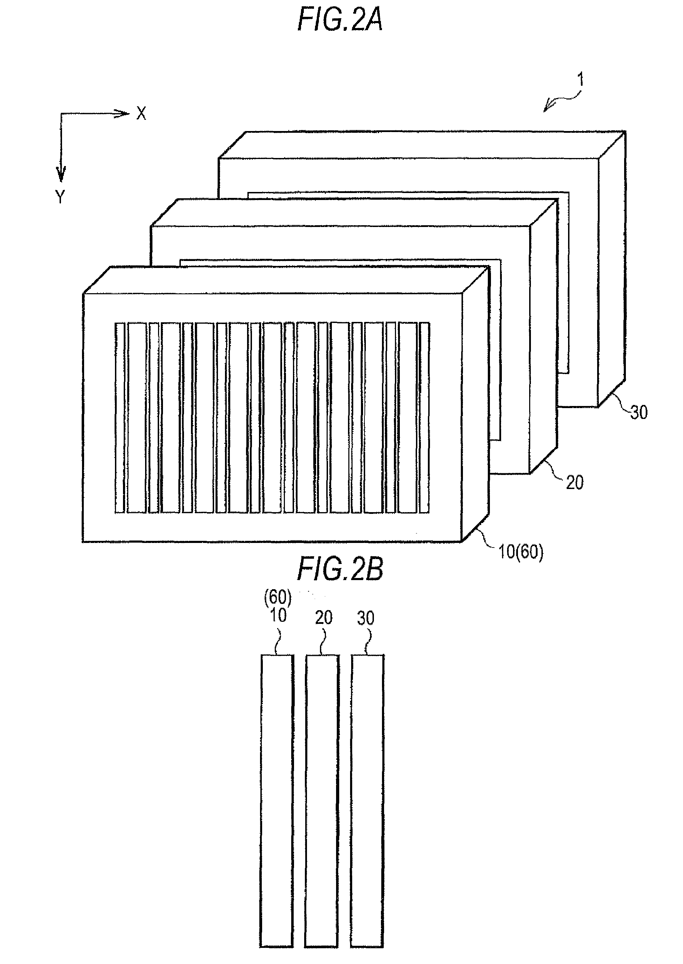

Figs. 2A and 2B show an example of the configuration of a key portion of the stereoscopic display apparatus 1. Fig. 2A is a perspective exploded view showing the configuration of the stereoscopic display apparatus 1, and Fig. 2B is a side view of the stereoscopic display apparatus 1. As shown in Figs. 2A and 2B, the components of the stereoscopic display apparatus 1 are disposed in the following order: the backlight 30, the display unit 20, and the liquid crystal barrier unit 10. That is, the light emitted from the backlight 30 passes through the display unit 20 and the liquid crystal barrier unit 10 and reaches a viewer.

### (Display driver 50 and display unit 20)

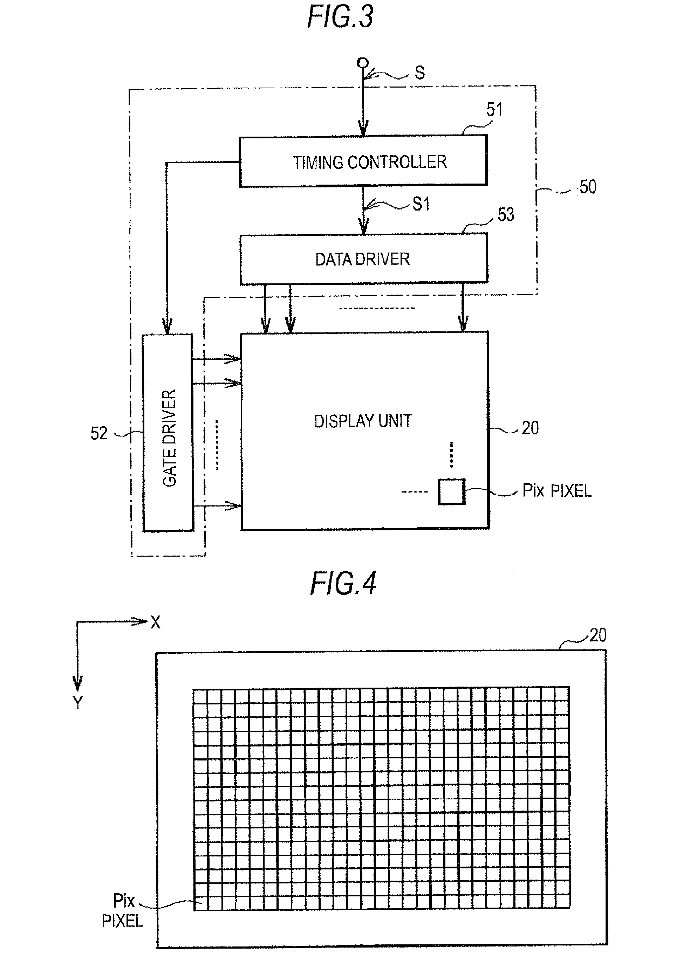

Fig. 3 is an exemplary block diagram of the display driver 50 and the display unit 20. Fig. 4 shows an example of the configuration of the display unit 20.

As shown in Fig. 3, the display driver 50 includes a timing controller 51, a gate driver 52, and a data driver 53. The timing controller 51 controls the timings at which the gate driver 52 and the data driver 53 are driven and supplies the data driver 53 with a video image signal S1 based on the video image signals S supplied from the controller 40. The gate driver 52 sequentially selects pixels Pix in the display unit 20 on a row basis in accordance with the timing control performed by the timing controller 51 for line sequential scanning. The data driver 53 supplies the pixels Pix in the display unit 20 with pixel signals based on the video image signal S1. Specifically, the data driver 53 performs D/A (digital/analog) conversion based on the video image signal S1 to produce the pixel signals, which are analog signals, and supplies the pixels Pix with the pixel signals.

The display unit 20 is formed by encapsulating a liquid crystal material between two transparent substrates made, for example, of glass. Transparent electrodes made, for example, of ITO (indium tin oxide) are formed on each of the transparent substrates in an area facing the liquid crystal material. The transparent electrodes and the liquid crystal material form the pixels Pix. The pixels Pix are arranged in a matrix in the display unit 20, as shown in Fig. 4.

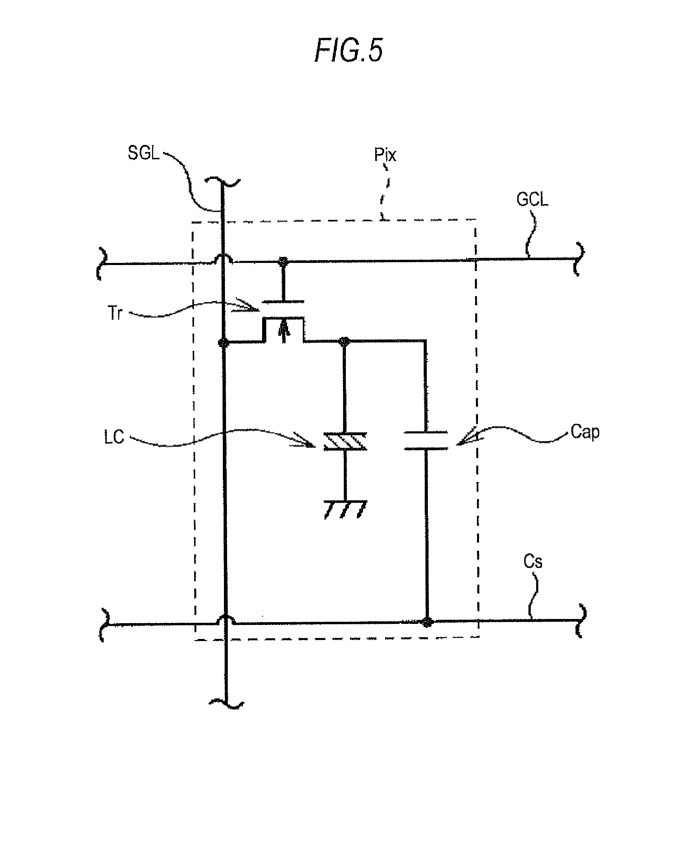

Fig. 5 is an exemplary circuit diagram of each of the pixels Pix. Each of the pixels Pix includes a TFT (thin film transistor) device Tr, a liquid crystal device LC, and a retention capacitance device Cap. The TFT device Tr is, for example, a MOS-FET (metal oxide semiconductor field effect transistor) and has a gate connected to a gate line GCL, a source connected to a data line SGL, and a drain connected to an end of the liquid crystal device LC and an end of the retention capacitance device Cap. The liquid crystal device LC has one end connected to the drain of the TFT device Tr and the other end grounded. The retention capacitance device Cap has one end connected to the drain of the TFT device Tr and the other end connected to a retention capacitance line Cs. The gate line GCL is connected to the gate driver 52, and the data line SGL is connected to the data driver 53.

In the configuration described above, the light emitted from the backlight 30 passes through a polarizer (not shown) disposed on the light-incident side of the display unit 20, is converted into light linearly polarized in the direction determined by the polarizer, and is incident on each of the liquid crystal devices LC. In the liquid crystal devices LC, the direction of the liquid crystal molecules changes after a certain response period in accordance with a pixel signal supplied through the data line SGL. When light is incident on the liquid crystal device LC, the polarization direction of the light changes. The light having passed through the liquid crystal device LC is then incident on a polarizer (not shown) disposed on the light-exiting side of the display unit 20, and the polarizer transmits only light having a specific polarization direction. The liquid crystal device LC thus modulates the intensity of the incident light.

### (Liquid crystal barrier 10)

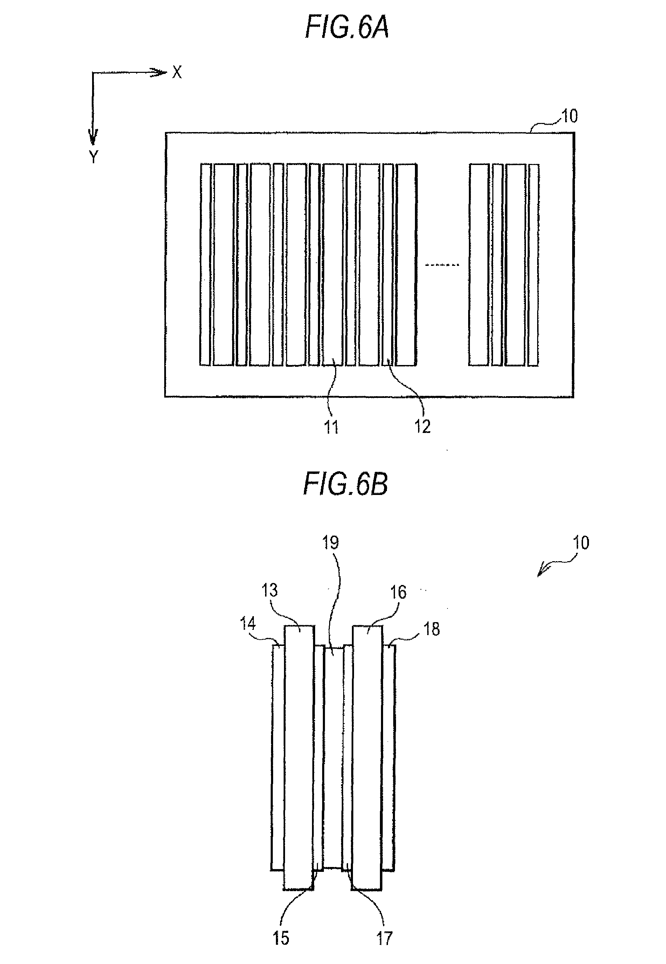

Figs. 6A and 6B show an example of the configuration of the liquid crystal barrier unit 10. Fig. 6A is a plan view of the liquid crystal barrier unit 10, and Fig. 6B is a side view of the liquid crystal barrier unit 10. In this example, the liquid crystal barrier unit 10 operates in a normally black scheme. That is, the liquid crystal barrier unit 10 blocks light when not driven.

The liquid crystal barrier unit 10 includes a plurality of open/close units 11 and 12 that transmit or block light, as shown in Fig. 6A. The open/close units 11 and 12 extend in a y-axis direction (sequential scan direction) and are alternately arranged in an x-axis direction. The open/close units 11 and 12 operate differently depending on the display mode of the stereoscopic display apparatus 1, a normal display mode (two-dimensional display mode) and a stereoscopic display mode. Specifically, the open/close units 11 are open (transmit light) when the stereoscopic display apparatus 1 operates in the normal display mode, whereas being closed (blocking light) when the stereoscopic display apparatus 1 operates in the stereoscopic display mode, as will be described later. The open/close units 12 are open (transmit light) when the stereoscopic display apparatus 1 operates in the normal display mode, whereas being open or closed in a time division manner when the stereoscopic display apparatus 1 operates in the stereoscopic display mode, as will be described later.

The liquid crystal barrier unit 10 includes a transparent substrate 13, a transparent substrate 16 facing the transparent substrate 13, and a liquid crystal layer 19 inserted between the transparent substrates 13 and 16, as shown in Fig. 6B. The transparent substrates 13 and 16 are made, for example, of glass. A plurality of transparent electrodes 15 and 17 made, for example, of ITO are formed on the surface of the transparent substrate 13 that faces the liquid crystal layer 19 and the surface of the transparent substrate 16 that faces the liquid crystal layer 19, respectively. The transparent electrodes 15 formed on the transparent substrate 13 and the transparent electrodes 17 formed on the transparent substrate 16 are so disposed that they correspond to each other and form along with the liquid crystal layer 19 the open/close units 11 and 12. A polarizer 14 is formed on the surface of the transparent substrate 13 on the side opposite to the liquid crystal layer 19, and a polarizer 18 is formed on the surface of the transparent substrate 16 on the side opposite to the liquid crystal layer 19. Although not shown in Fig. 6B, the display unit 20 and the backlight 30 are disposed in the order shown in Fig. 2B to the right side of the liquid crystal barrier unit 10 (to the right side of the polarizer 18).

The open/close units 11 and 12 in the liquid crystal barrier unit 10 are opened or closed in the same manner as the display unit 20 displays video images. That is, the light having exited from the backlight 30 and passed through the display unit 20 becomes linearly polarized light having a polarization direction determined by the polarizer 18, and enters the liquid crystal layer 19. In the liquid crystal layer, the direction of the liquid crystal molecules changes after a certain response period in accordance with the difference in potential produced between the transparent electrodes 15 and 17. When light is incident on the liquid crystal layer 19, the polarization direction of the light changes. The light having passed through the liquid crystal layer 19 is incident on the polarizer 14, which transmits only light having a specific polarization direction. The liquid crystal layer 19 thus modulates the intensity of the incident light.

In the configuration described above, when voltage is so applied between the transparent electrodes 15 and 17 that the difference in potential there between increases, the optical transmittance of the liquid crystal layer 19 increases and hence the open/close units 11 and 12 transmit light. On the other hand, when the difference in potential between the transparent electrodes 15 and 17 decreases, the optical transmittance of the liquid crystal layer 19 decreases and hence the open/close units 11 and 12 block light.

In this example, the liquid crystal barrier unit 10 operates, but does not necessarily, in a normally black scheme. Instead, the liquid crystal barrier unit 10 may operate, for example, in a normally white scheme. In this case, when the difference in potential between the transparent electrodes 15 and 17 increases, the open/close units 11 and 12 block light, whereas when the difference in potential between the transparent electrodes 15 and 17 decreases, the open/close units 11 and 12 transmit light. Either the normally black scheme or the normally white scheme can be chosen, for example, by changing the settings of the polarizers and the orientation of the liquid crystal molecules.

The plurality of open/close units 12 are grouped, and a plurality of open/close units 12 that belong to the same group are opened or closed at the same timing in the stereoscopic display mode. Grouping of the open/close units 12 will be described below.

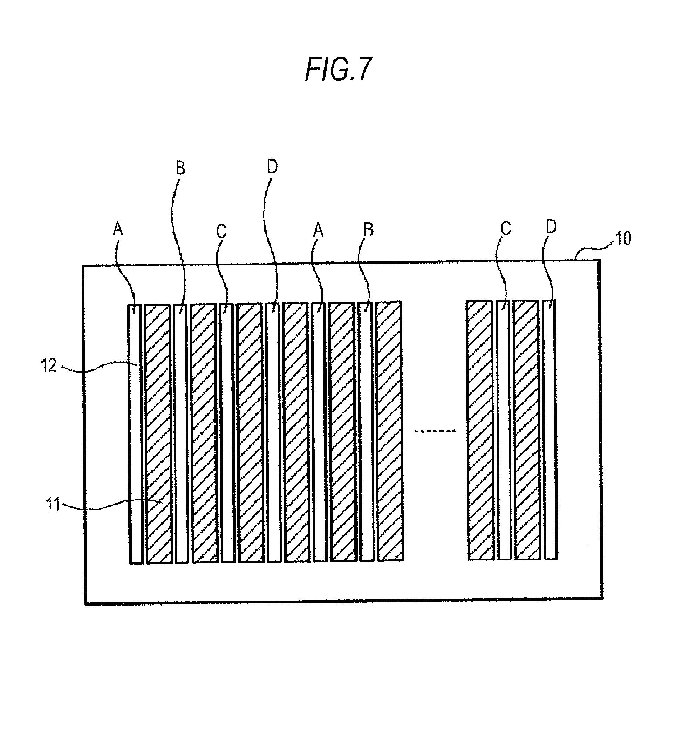

Fig. 7 shows an example of the grouping of the open/close units 12. In this example, the open/close units 12 are so grouped that four groups A to D cyclically appear along the x-axis direction. In the following description, the open/close units 12 that belong to the group A are collectively called open/close units 12A as appropriate. The open/close units 12 that belong to the group B are collectively called open/close units 12B as appropriate. The open/close units 12 that belong to the group C are collectively called open/close units 12C as appropriate. The open/close units 12 that belong to the group D are collectively called open/close units 12D as appropriate.

The barrier driver 41 drives the plurality of open/close units 12 that belong to the same group in such a way that they are opened or closed at the same timing in the stereoscopic display mode. Specifically, the barrier driver 41 drives the plurality of open/close units 12A, which belong to the group A, the plurality of open/close units 12B, which belong to the group B, the plurality of open/close units 12C, which belong to the group C, and the plurality of open/close units 12D, which belong to the group D, in such way that they are sequentially open and closed in a time division manner, as will be described later. To operate the plurality of open/close units 12 that belong to the same group at the same timing as described above, the barrier driver 41 may, for example, simultaneously apply drive signals to the transparent electrodes 15 and 17 associated with the plurality of open/close units 12 that belong to the same group. Alternatively, the transparent electrodes 15 and 17 associated with the plurality of open/close units 12 that belong to the same group are connected to each other, and a drive signal may be applied simultaneously thereto.

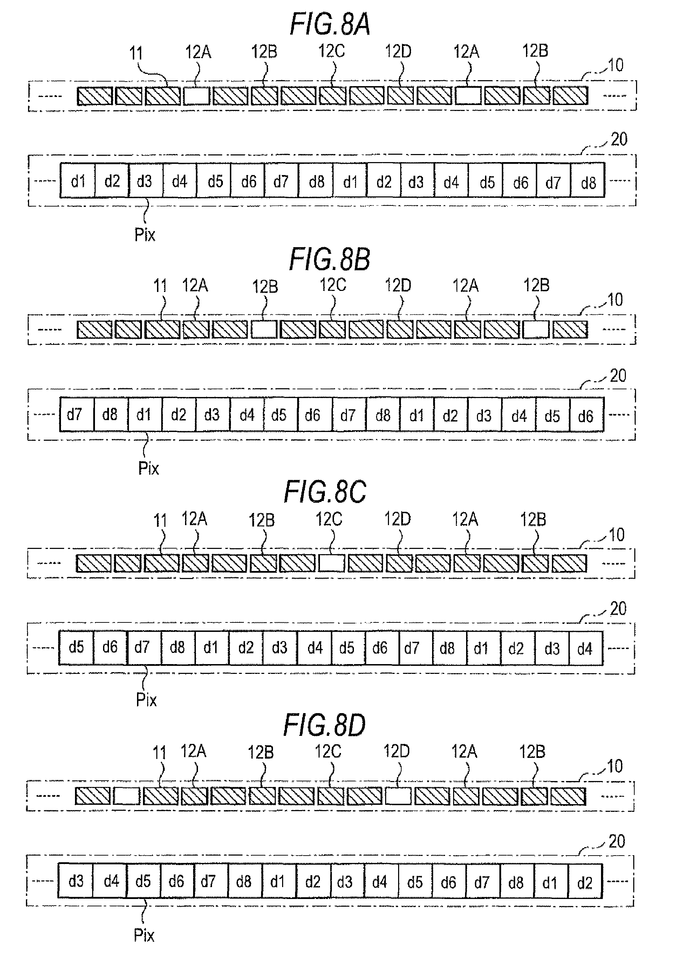

Figs. 8A to 8D diagrammatically show an example of how the liquid crystal barrier unit 10 and the display unit 20 operate with reference to the cross-sectional structure thereof. Figs. 8A to 8D show four states of the liquid crystal barrier unit 10 and the display unit 20 in the stereoscopic display mode. In this example, the open/close units 12A are so provided that the ratio thereof to the pixels Pix in the display unit 20 is one to eight. Similarly, the open/close units 12B, 12C, and 12D are so provided that the ratio thereof to the pixels Pix in the display unit 20 is one to eight. In the following description, each of the pixels Pix is formed of, but not necessarily, three sub-pixels (RGB). Alternatively, each pixel Pix may, for example, be a sub-pixel. It is noted in Figs. 8A to 8D that the open/close units that block light are hatched.

When the stereoscopic display apparatus 1 operates in the stereoscopic display mode, the video image signals SA to SD are supplied to the display driver 50 in a time division manner, and the display unit 20 displays video images based on the video image signals SA to SD. In the liquid crystal barrier unit 10, the open/close units 12 (open/close units 12A to 12D) are opened or closed in a time division manner in synchronization with the display operation of the liquid crystal barrier unit 10, whereas the open/close units 11 are kept closed (block light). Specifically, when the video image signal SA (combined frame image FA) is supplied, the open/close units 12A are opened, whereas the other open/close units 12 are closed, as shown in Fig. 8A. In the display unit 20, eight pixels Pix disposed adjacent to each other in positions corresponding to each of the open/close units 12A display eight viewpoint video images contained in the video image signal SA (pixel information d1 to d8), as will be described later. Similarly, when the video image signal SB (combined frame image FB) is supplied, the open/close units 12B are opened, whereas the other open/close units 12 are closed, as shown in Fig. 8B. In the display unit 20, eight pixels Pix disposed adjacent to each other in positions corresponding to each of the open/close units 12B display eight viewpoint video images contained in the video image signal SB (pixel information d1 to d8). When the video image signal SC (combined frame image FC) is supplied, the open/close units 12C are opened, whereas the other open/close units 12 are closed, as shown in Fig. 8C. In the display unit 20, eight pixels Pix disposed adjacent to each other in positions corresponding to each of the open/close units 12C display eight viewpoint video images contained in the video image signal SC (pixel information d1 to d8). When the video image signal SD (combined frame image FD) is supplied, the open/close units 12D are opened, whereas the other open/close units 12 are closed, as shown in Fig. 8D. In the display unit 20, eight pixels Pix disposed adjacent to each other in positions corresponding to each of the open/close units 12D display eight viewpoint video images contained in the video image signal SD (pixel information d1 to d8). In this way, for example, the viewpoint video images that viewer looks at with the right differ from those viewed with the left eyes so that the viewer stereoscopically recognizes the displayed video images, as will be described later. In the stereoscopic display apparatus 1, displaying video images by switching the state of each of the open/close units 12A to 12D to the open state in a time division manner allows the resolution of the display apparatus to be increased, as will be described later.

In the normal display mode (two-dimensional display mode), the open/close units 11 and the open/close units 12 (open/close units 12A to 12D) in the liquid crystal barrier unit 10 are both kept open (transmitting light). In this way, the viewer can view normal two-dimensional video images displayed in the display unit 20 as they are based on the video image signals S.

The open/close units 12 correspond to a specific example of a "light barrier" according to the present disclosure. The groups A to D correspond to a specific example of "barrier groups" according to the present disclosure. The frame images P1 to P8 and Q1 to Q8 correspond to a specific example of "multi-viewpoint images" according to the present disclosure. The period of a barrier open/close cycle T1 corresponds to a specific example of a "single cyclic period" according to the present disclosure.

The combined frame images FA to FD correspond to a specific example of "combined images" according to the present disclosure. The liquid crystal barrier unit 10 corresponds to a specific example of a "light barrier unit" according to the present disclosure.

### [Operation and effect]

The operation and effect of the stereoscopic display apparatus 1 according to the present embodiment will next be described.

### (Outline of overall operation)

An overall operation of the stereoscopic display apparatus 1 when it displays video images stereoscopically will first be described with reference to Fig. 1. The combined image generator 45 combines viewpoint images (frame images P1 to P8 and Q1 to Q8) contained in the externally supplied video image signal Sdisp to generate the combined frame images FA to FD and generates the video image signal Sdisp2 formed of the video image signals SA to SD containing the combined frame images FA to FD. The controller 40 supplies the display driver 50 with the video image signals SA to SD based on the video image signal Sdisp2 and supplies the backlight driver 42 and the barrier driver 41 with control signals to control the drivers to operate in synchronization with one another. The backlight driver 42 drives the backlight 30. The backlight 30 emits light in the form of surface emission to the display unit 20. The display driver 50 drives the display unit 20 based on the video image signals SA to SD supplied form the controller 40. The display unit 20 displays video images by modulating the light emitted from the backlight 30. The barrier driver 41 drives the liquid crystal barrier unit 10. The open/close units 11 and 12 (12A to 12D) in the liquid crystal barrier unit 10 transmit or block the light having exited from the backlight 30 and passed through the display unit 20.

### (Detailed operation in stereoscopic display)

Detailed operation in stereoscopic display will next be described with reference to several figures.

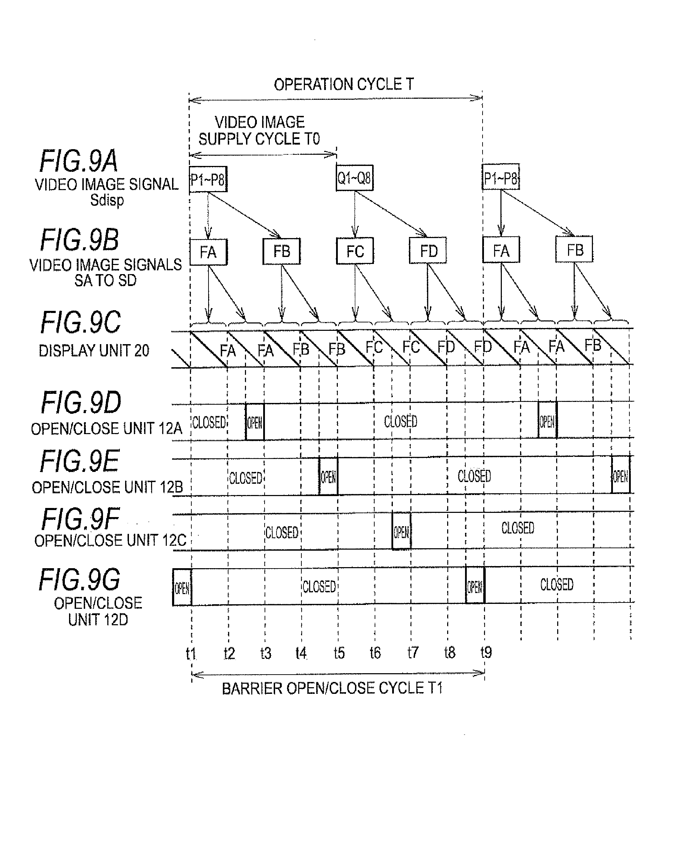

Figs. 9A to 9G are timing charts based on which the stereoscopic display apparatus 1 displays video images. Fig. 9A shows the video image signal Sdisp. Fig. 9B shows the video image signals SA to SD. Fig. 9C shows the operation of the display unit 20. Figs. 9D to 9G show the operation of the open/close units 12A to 12D in the liquid crystal barrier unit 10, respectively.

The vertical axis of Fig. 9C represents the position along the line sequential scan direction (y-axis direction) in the display unit 20. That is, Fig. 9C shows the operation of the display unit 20 at a certain position along the y-axis direction at certain time. In Fig. 9C, "FA" represents that the display unit 20 is displaying the combined frame image FA based on the video image signal SA. "FB" represents that the display unit 20 is displaying the combined frame image FB based on the video image signal SB. "FC" represents that the display unit 20 is displaying the combined frame image FC based on the video image signal SC. "FD" represents that the display unit 20 is displaying the combined frame image FD based on the video image signal SD. Further, in Figs. 9D to 9G, "open" represents that the corresponding open/close units 12 (any of 12A to 12D) are open (transmit light), and "closed" represents that the corresponding open/close units 12 are closed (block light).

The stereoscopic display apparatus 1 is supplied with viewpoint video images corresponding to eight viewpoints (frame images P1 to P8 and Q1 to Q8) in the form of video image signal Sdisp for each video image supply cycle T0 In the stereoscopic display apparatus 1, the combined image generator 45 generates the combined frame images FA to FD based on the two sets of frame images P1 to P8 and Q1 to Q8 different from each other, and the display unit 20 displays the combined frame images FA to FD in a time division manner. The open/close units 12A to 12D are opened or closed in a barrier open/close cycle T1 in synchronization with the display operation. That is, a period corresponding to two video image supply cycles T0 is equal to a period corresponding to one barrier open/close cycle T1. The stereoscopic display apparatus 1 repeats the operation described above for each operation cycle T. The video image supply cycle T0 is, for example, about 16.7 [msec] (=1/60 [Hz]). In this case, each of the barrier open/close cycle T1 and the operation cycle T is, for example, about 33.3 [msec] (=1/30 [Hz]). The video image supply cycle T0 and the barrier open/close cycle T1 are not limited to the values described above. For example, the video image supply cycle T0 may be 20 [msec] (=1/50 [Hz]), and each of the barrier open/close cycle T1 and the operation cycle T may be 40 [msec] (=1/25 [Hz]), or the three cycles may have other values. The above operation will be described below in detail.

The stereoscopic display apparatus 1 displays the combined frame image FA in the period from the timing t1 to t3.

The combined image generator 45 first performs combining operation to generate the combined frame image FA (video image signal SA) based on the frame images P1 to P8 (Fig. 9B).

In the period from the timing t1 to t2, the display unit 20 performs line sequential scanning from the uppermost portion toward the lowermost portion of the display unit 20 based on a drive signal supplied from the display driver 50 to display the combined frame image FA (Fig. 9C). In the liquid crystal barrier unit 10, the open/close units 12A to 12D are kept closed during the period from the timing t1 to t2 (Figs. 9D to 9G). The viewer therefore will not view any transient change of the images displayed on the display unit 20, whereby degradation in image quality can be reduced.

In the period from the timing t2 to t3, the display unit 20 performs line sequential scanning from the uppermost portion toward the lowermost portion of the display unit 20 based on a drive signal supplied from the display driver 50 to display the combined frame image FA again (Fig. 9C). That is, in this example, the combined frame image FA is repeatedly displayed twice in the period from the timing t1 to t3. When the second image is displayed, the liquid crystal molecules in the display unit 20 have already responded, and the viewer can view a stable video image. In the liquid crystal barrier unit 10, the open/close units 12A are open based on a drive signal from the barrier driver 41 after the liquid crystal molecules in the display unit 20 have responded in the period from the timing t2 to t3 (Fig. 9D). The viewer can therefore view the combined frame image FA displayed on the display unit 20 in the open period.

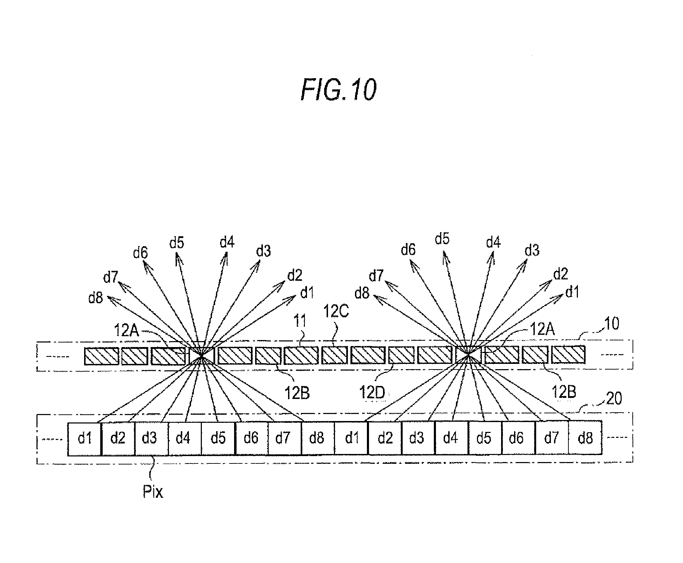

Fig. 10 shows an example of how the display unit 20 and the liquid crystal barrier unit 10 operate when they display the combined frame image FA. When the combined frame image FA (video image signal SA) is displayed, the display unit 20 uses the pixels Pix disposed in the vicinity of each of the open/close units 12A to display the pixel information d1 to d8 corresponding to the eight viewpoint video images contained in the combined frame image FA, as described with reference to Fig. 8A. In the liquid crystal barrier unit 10, the open/close units 12A are open (transmit light), whereas the open/close units 12B to 12D are closed. Light having passed through each of the pixels Pix in the display unit 20 is outputted through the corresponding open/close unit 12A with the angle of the light limited thereby. The viewer looks at, for example, the pixel information d4 with the left eye and the pixel information d5 with the right eye for stereoscopic recognition of the video image.

The stereoscopic display apparatus 1 then displays the combined frame image FB in the period from the timing t3 to t5.

The combined image generator 45 performs combining operation to generate the combined frame image FB (video image signal SB) based on the frame images P1 to P8 (Fig. 9B).

In the period from the timing t3 to t4, the display unit 20 displays the combined frame image FB based on a drive signal supplied from the display driver 50 (Fig. 9C). In the liquid crystal barrier unit 10, the open/close units 12A to 12D are kept closed during the period from the timing t3 to t4 during the period from the timing t3 to t4 (Figs. 9D to 9G). The viewer therefore will not view any transient change on the display unit 20 from the combined frame image FA to the combined frame image FB, whereby degradation in image quality can be reduced.

In the period from the timing t4 to t5, the display unit 20 displays the combined frame image FB again based on a drive signal supplied from the display driver 50 (Fig. 9C). In the liquid crystal barrier unit 10, the open/close units 12B are open based on a drive signal from the barrier driver 41 after the liquid crystal molecules in the display unit 20 have responded in the period from the timing t4 to t5 (Fig. 9E). The viewer can view the combined frame image FB displayed on the display unit 20 in the open period, as in the case of the combined frame image FA (Fig. 10).

The stereoscopic display apparatus 1 then displays the combined frame image FC in the period from the timing t5 to t7.

The combined image generator 45 performs combining operation to generate the combined frame image FC (video image signal SC) based on newly supplied frame images Q1 to Q8 (Fig. 9B).

In the period from the timing t5 to t6, the display unit 20 displays the combined frame image FC based on a drive signal supplied from the display driver 50 (Fig. 9C). In the liquid crystal barrier unit 10, the open/close units 12A to 12D are kept closed during the period from the timing t5 to t6 (Figs. 9D to 9G). The viewer therefore will not view any transient change on the display unit 20 from the combined frame image FB to the combined frame image FC, whereby degradation in image quality can be reduced.

In the period from the timing t6 to t7, the display unit 20 displays the combined frame image FC again based on a drive signal supplied from the display driver 50 (Fig. 9C). In the liquid crystal barrier unit 10, the open/close units 12C are open based on a drive signal from the barrier driver 41 after the liquid crystal molecules in the display unit 20 have responded in the period from the timing t6 to t7 (Fig. 9F). The viewer can view the combined frame image FC displayed on the display unit 20 in the open period, as in the case of the combined frame image FA (Fig. 10).

The stereoscopic display apparatus 1 then displays the combined frame image FD in the period from the timing t7 to t9.

The combined image generator 45 performs combining operation to generate the combined frame image FD (video image signal SD) based on the frame images Q1 to Q8 (Fig. 9B).

In the period from the timing t7 to t8, the display unit 20 displays the combined frame image FD based on a drive signal supplied from the display driver 50 (Fig. 9C). In the liquid crystal barrier unit 10, the open/close units 12A to 12D are kept closed during the period from the timing t7 to t8 (Figs. 9D to 9G) . The viewer therefore will not view any transient change on the display unit 20 from the combined frame image FC to the combined frame image FD, whereby degradation in image quality can be reduced.

In the period from the timing t8 to t9, the display unit 20 displays the combined frame image FD again based on a drive signal supplied from the display driver 50 (Fig. 9C). In the liquid crystal barrier unit 10, the open/close units 12D are open based on a drive signal from the barrier driver 41 after the liquid crystal molecules in the display unit 20 have responded in the period from the timing t8 to t9 (Fig. 9G). The viewer can view the combined frame image FD displayed on the display unit 20 in the open period, as in the case of the combined frame image FA (Fig. 10).

By repeating the operation described above, the stereoscopic display apparatus 1 generates the combined frame images FA to FD based on the two sets of frame images P1 to P8 and Q1 to Q8, which are different from each other and supplied in the form of video image signal Sdisp, and switches the displayed image among the combined frame image FA (through open/close units 12A), the combined frame image FB (through open/close units 12B), the combined frame image FC (through open/close units 12C), and the combined frame image FD (through open/close units 12D) in a time division manner.

The stereoscopic display apparatus 1 sequentially displays the combined frame images FA and FB generated based on the frame images P1 to P8 and the combined frame images FC and FD generated based on the frame images Q1 to Q8 in positions shifted from each other (open/close units 12A to 12D) in a time division manner. The viewer visually recognizes the images displayed in a time division manner as an integrated image. The thus visually recognized image will be described below.

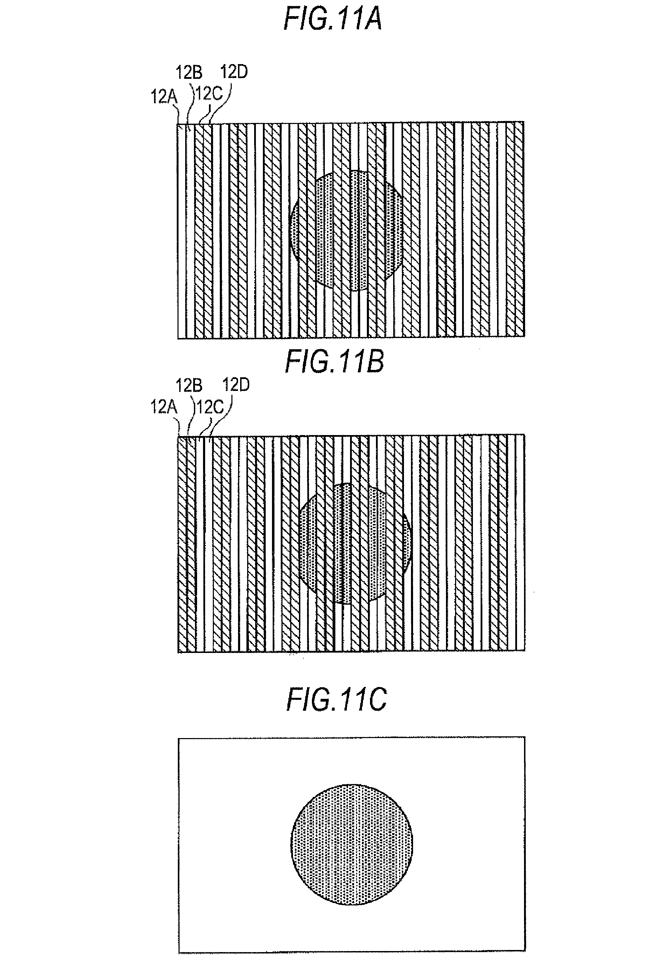

Figs. 11A to 11C show an example of how the stereoscopic display apparatus 1 displays video images. Fig. 11A shows an image visually recognized in a display period based on the frame images P1 to P8. Fig. 11B shows an image visually recognized in a display period based on the frame images Q1 to Q8. Fig. 11C shows an image visually recognized in a single operation cycle period. The display period based on the frame images P1 to P8 corresponds to the period from the timing t1 to t5 in Figs. 9A to 9G, and the display period based on the frame images Q1 to Q8 corresponds to the period from the timing t5 to t9 in Figs. 9A to 9G. The single operation cycle period corresponds to the period from the timing t1 to t9 in Figs. 9A to 9G. In Figs. 11A to 11C, the open/close units 11 are omitted for ease of illustration.

When the frame images P1 to P8 are supplied, the stereoscopic display apparatus 1 displays the combined frame images FA and FB in the portions corresponding to the open/close units 12A and 12B, as shown in Fig. 11A. When the frame images Q1 to Q8 different from the frame images P1 to P8 are supplied, the stereoscopic display apparatus 1 displays the combined frame images FC and FD in the portions corresponding to the open/close units 12C and 12D, as shown in Fig. 11B. In this way, in a single operation cycle period, the image visually recognized in the display period associated with the frame images P1 to P8 (Fig. 11A) and the image visually recognized in the display period associated with the frame images Q1 to Q8 (Fig. 11B) are superimposed over each other, whereby the image shown in Fig. 11C is visually recognized.

As described above, sequentially displaying the combined frame images FA and FB and the combined frame images FC and FD generated based on different frame images in positions shifted from each other (open/close units 12A to 12D) in a time division manner provides an interlaced display-like effect. In particular, when motion images are displayed, smooth video images with a reduced degree of flickering are displayed.

### (Operation of combined image generator 45)

The combining operation performed by the combined image generator 45 will next be described.

In the stereoscopic display apparatus 1, the combined image generator 45 combines the frame images P1 to P8 to generate the combined frame images FA and FB and combines the frame images Q1 to Q8 different from the frame images P1 to P8 to generate the combined frame images FC and FD.

Generation of the combined frame images FA and FB will first be described.

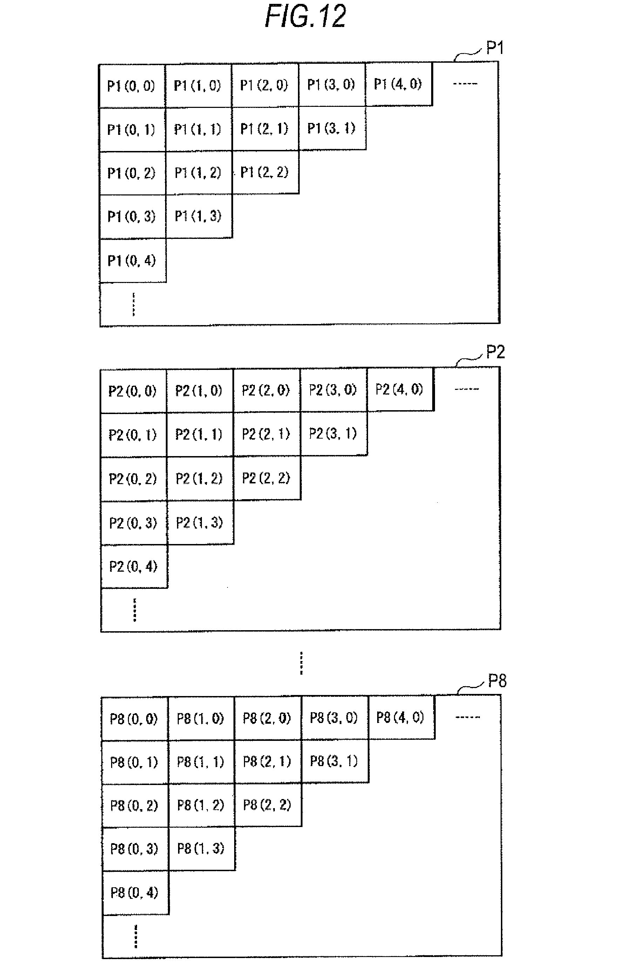

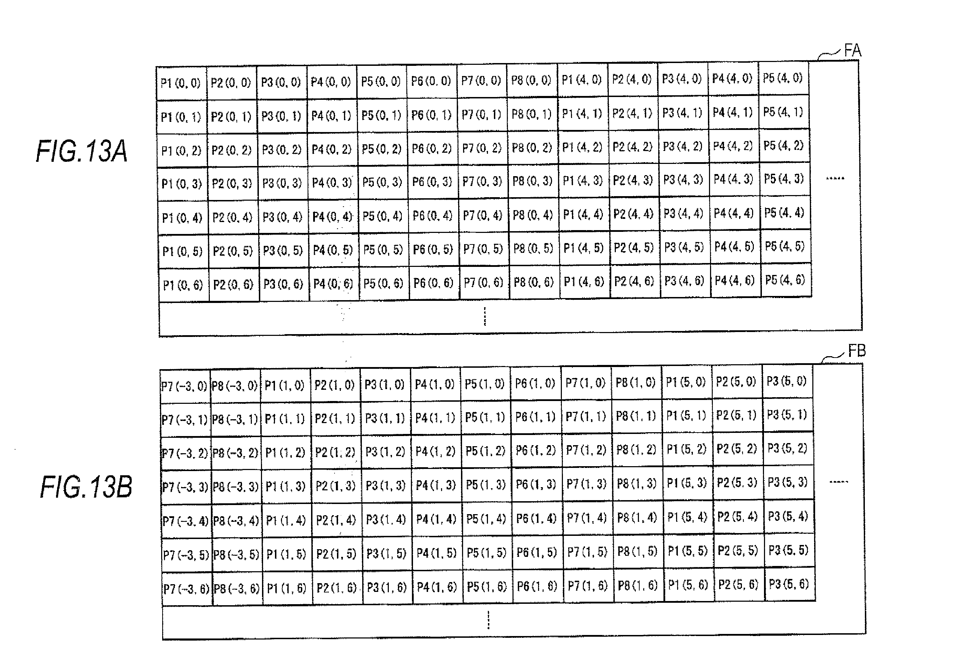

Fig. 12 shows a pixel information layout in each of the frame images P1 to P8. Fig. 13A shows a pixel information layout in the combined frame image FA, and Fig. 13B shows a pixel information layout in the combined frame image FB. The combined image generator 45 combines the frame images P2 to P8 (Fig. 12), which are eight viewpoint video images contained in the inputted video image signal Sdisp, to generate the combined frame images FA and FB (Figs. 13A and 13B).

Each of the frame images P1 to P8 is formed of a plurality of pieces of pixel information arranged in a matrix, as shown in Fig. 12. Specifically, for example, the frame image P1 is formed of a plurality of pieces of pixel information P1 (0,0),.., P1(m,n),... (m, n: integer) arranged in a matrix, and the frame image P2 is formed of a plurality of pieces of pixel information P2(0,0),..., P2(m,n),....

The combined image generator 45 selects pixel information disposed in every four columns of each of the frame images P1 to P8 and generates the combined frame images FA and FB based on the selected pieces of pixel information.

To generate the combined frame image FA, the combined image generator 45 first selects the pixel information in the zero-th column of each of the frame images P1 to P8 (P1(0,n), P2(0,n),..., P8(0,n)) and arranges the selected pieces of pixel information in the combined frame image FA from left to right, as shown in Fig. 13A. The combined image generator 45 then selects the pixel information in the fourth column of each of the frame images P1 to P8 (P1(4,n), P2 (4,n) ,..., P8 (4,n)) and arranges the selected pieces of pixel information immediately after the pixel information having been arranged. The combined image generator 45 generates the combined frame image FA by repeating the process described above. The pieces of pixel information in the combined frame image FA correspond to the pieces of pixel information shown in Fig. 8A. Specifically, for example, the pieces of pixel information P1(0,n), P1 (4,n),... in the combined frame image FA correspond to the pieces of pixel information d1 shown in Fig. 8A, and the pieces of pixel information P2(0,n), P2(4,n),... in the combined frame image FA correspond to the pieces of pixel information d2 shown in Fig. 8A.

To generate the combined frame image FB, the combined image generator 45 first disposes dummy pixel information P7 (-3,n) and P8 (-3,n3, then selects the pixel information in the first column of each of the frame images P1 to P8 (P1(1,n), P2(1,n),..., P8(1,n)), and arranges the selected pieces of pixel information in the combined frame image FB from left to right, as shown in Fig. 13B. The combined image generator 45 then selects the pixel information in the fifth column of each of the frame images P1 to P8 (P1(5,n), P2(5,n),..., P8(5,n)) and arranges the selected pieces of pixel information immediately after the pixel information having been arranged. The combined image generator 45 generates the combined frame image FB by repeating the process described above. The pieces of pixel information in the combined frame image FB correspond to the pieces of pixel information shown in Fig. 8B. Specifically, for example, the pieces of pixel information P1(1,n), P1(5,n),... in the combined frame image FB correspond to the pieces of pixel information d1 shown in Fig. 8B, and the pieces of pixel information P2(1,n), P2(5,n),... in the combined frame image FB correspond to the pieces of pixel information d2 shown in Fig. 8B.

The dummy pixel information can, for example, be information representing black. Alternatively, for example, dummy pixel information may be generated by interpolation based on pixel information on pixels disposed in the vicinity of a pixel of interest.

The combined image generator 45 generates the combined frame images FC and FD by performing the same combining operation used to generate the combined frame images FA and FB described above. How to generate the combined frame images FC and FD will be described below.

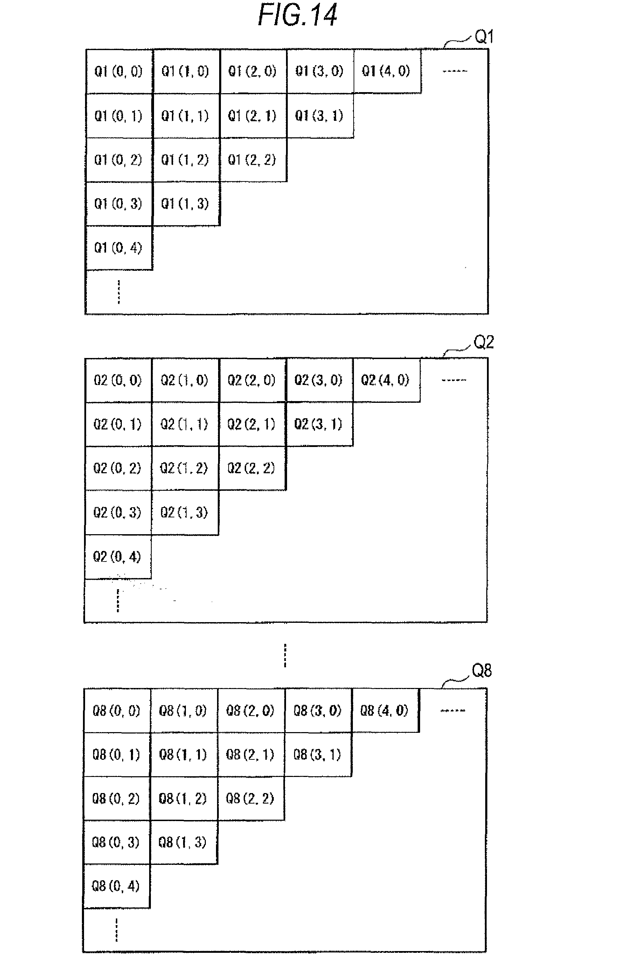

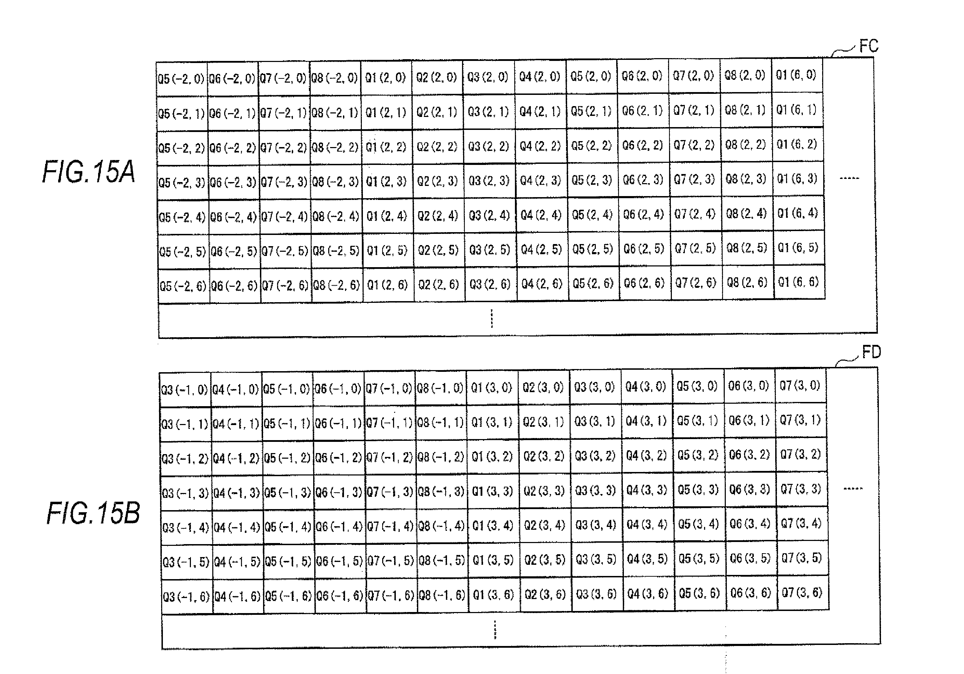

Fig. 14 shows a pixel information layout in each of the frame images Q1 to Q8. Fig. 15A shows a pixel information layout in the combined frame image FC, and Fig. 15B shows a pixel information layout in the combined frame image FD. The combined image generator 45 combines the frame images Q1 to Q8 (Fig. 14), which are eight viewpoint video images contained in the inputted video image signal Sdisp, to generate the combined frame images FC and FD (Figs. 15A and 15B).

Each of the frame images Q1 to Q8 is formed of a plurality of pieces of pixel information arranged in a matrix, as shown in Fig. 14. Specifically, for example, the frame image Q1 is formed of a plurality of pieces of pixel information Q1 (0,0),..., Q1 (m,n),.., arranged in a matrix, and the frame image Q2 is formed of a plurality of pieces of pixel information Q2(0,0),..., Q2 (m,n) ,....

To generate the combined frame image FC, the combined image generator 45 first disposes dummy pixel information Q5(-2,n), Q6(-2,n), Q7(-2,n), and Q8(-2,n), then selects the pixel information in the second column of each of the frame images Q1 to Q8 (Q1(2,n), Q2(2,n),..., Q8(2,n)), and arranges the selected pieces of pixel information in the combined frame image FC from left to right, as shown in Fig. 15A. The combined image generator 45 then selects the pixel information in the sixth column of each of the frame images Q1 to Q8 (Q1 (6,n), Q2 (6,n), ..., Q8 (6, n)) and arranges the selected pieces of pixel information immediately after the pixel information having been arranged. The combined image generator 45 generates the combined frame image FC by repeating the process described above. The pieces of pixel information in the combined frame image FC correspond to the pieces of pixel information shown in Fig. 8C. Specifically, for example, the pieces of pixel information Q1 (2,n), Q1 (6,n) ,... in the combined frame image FC correspond to the pieces of pixel information d1 shown in Fig. 8C, and the pieces of pixel information Q2 (2,n), Q2 (6,n) ,... in the combined frame image FC correspond to the pieces of pixel information d2 shown in Fig. 8C.

To generate the combined frame image FD, the combined image generator 45 first disposes dummy pixel information Q3(-1,n), Q4(-1,n), Q5(-1,n), Q6(-1,n), Q7(-1,n), and Q8 (-1,n), then selects the pixel information in the third column of each of the frame images Q1 to Q8 (Q1 (3,n), Q2 (3,n) ,..., Q8(3,n)), and arranges the selected pieces of pixel information in the combined frame image FD from left to right, as shown in Fig. 15B. The combined image generator 45 then selects the pixel information in the seventh column of each of the frame images Q1 to Q8 (Ql(7,n), Q2(7,n),..., Q8(7,n)) and arranges the selected pieces of pixel information immediately after the pixel information having been arranged. The combined image generator 45 generates the combined frame image FD by repeating the process described above. The pieces of pixel information in the combined frame image FD correspond to the pieces of pixel information shown in Fig. 8D. Specifically, for example, the pieces of pixel information Q1(3,n), Q1 (7,n) ,... in the combined frame image FD correspond to the pieces of pixel information d1 shown in Fig. 8D, and the pieces of pixel information Q2 (3,n) , Q2(7,n),... in the combined frame image FD correspond to the pieces of pixel information d2 shown in Fig. 8D.

The stereoscopic display apparatus 1 sequentially displays the combined frame images FA to FD generated by the combined image generator 45 in positions shifted from each other (open/close units 12A to 12D) in a time division manner. The viewer visually recognizes the images displayed in a time division manner as an integrated image. The pixel information layout in such a visually recognized image will be described below.

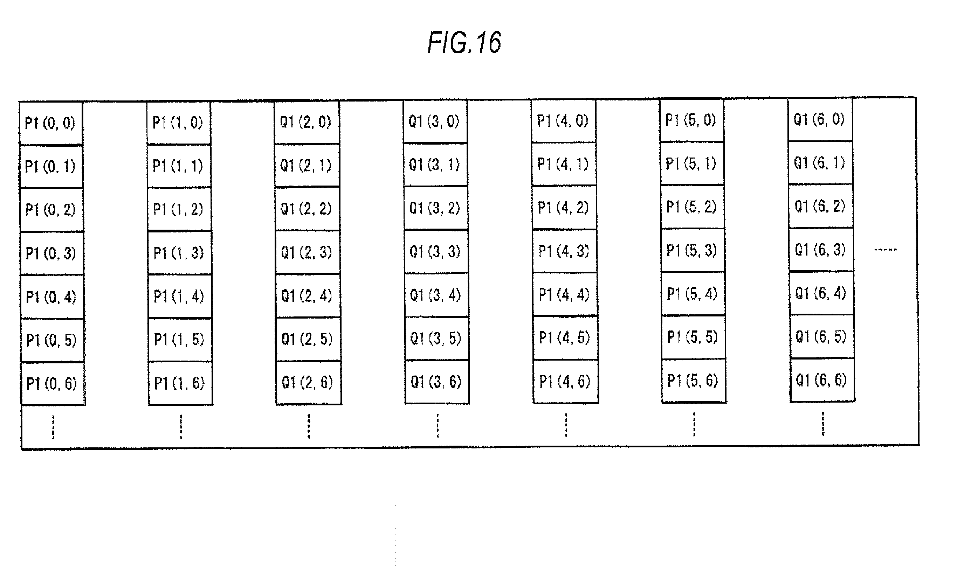

Fig. 16 shows a pixel information layout in a visually recognized image. In this example, it is assumed that the viewer looks at one of the eight viewpoint images (frame images P1, Q1 in this example) with one of the eyes.

The stereoscopic display apparatus 1 performs display operation in such a way that the viewer visually recognizes an image formed of pieces of pixel information P1(0,n), P1(1,n), Q1(2,n), Q1 (3,n), P1(4,n), P1(5,n), Q1(6,n),... arranged from left to right across a display screen, as shown in Fig. 16. The pieces of pixel information P1(0,n), P1(4,n),... are displayed based on the combined frame image FA (Fig. 13A) when the open/close units 12A are open, and the pieces of pixel information P1(1,n), P1(5,n),... are displayed based on the combined frame image FB (Fig. 13B) when the open/close units 12B are open. Similarly, the pieces of pixel information Q1(2,n), Q1(6,n),... are displayed based on the combined frame image FC (Fig. 15A) when the open/close units 12C are open, and the pieces of pixel information Q1(3,n)... are displayed based on the combined frame image FD (Fig. 15B) when the open/close units 12D are open. In Fig. 16, the space between pieces of pixel information adjacent to each other in the right-left direction corresponds to the area of the corresponding open/close unit 11.

As described above, displaying video images by switching the state of each of the four groups of the open/close units 12A to 12D to the open state in a time division manner allows the stereoscopic display apparatus 1 to achieve resolution four times as high as the resolution achieved when only the open/close units 12A are provided. In other words, the resolution of the stereoscopic display apparatus 1 is only reduced to one-half (=1/8x4) the resolution achieved in the two-dimensional display mode.

### (Comparative Example)

A stereoscopic display apparatus 1R according to Comparative Example will next be described. The stereoscopic display apparatus 1R generates combined frame images FA to FD based on a set of frame images P1 to P8.

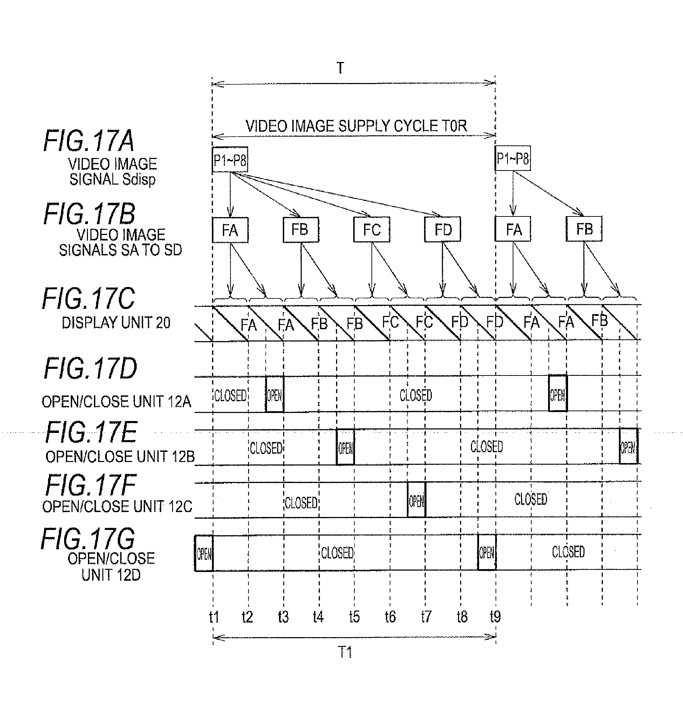

Figs. 17A to 17G are timing charts based on which the stereoscopic display apparatus 1R displays video images. Fig. 17A shows a video image signal Sdisp. Fig. 17B show video image signals SA to SD. Fig. 17C shows the operation of the display unit 20. Figs. 17D to 17G show the operation of the open/close units 12A to 12D in the liquid crystal barrier unit 10, respectively.

As shown in Figs. 17A and 17B, the stereoscopic display apparatus 1R according to Comparative Example differs from the stereoscopic display apparatus 1 according to the present embodiment (Figs. 9A to 9G) in that combined frame images FA to FD are generated based on a set of frame images P1 to P8. In other words, in the stereoscopic display apparatus 1R, a video image supply cycle TOR is equal to the barrier open/close cycle T1, whereby the video image supply cycle TOR according to Comparative Example is twice as long as the video image supply cycle T0 according to the present embodiment. Specifically, when the video image supply cycle T0 according to the present embodiment is 16.7 [msec] (=1/60 [Hz]), the video image supply cycle TOR according to Comparative Example is 33.3 [msec] (=1/30 [Hz]). When video images are supplied at such a long cycle, the viewer could feel that displayed video images flicker, as having been well known. In this case, the viewer feels that the image quality is degraded.

On the other hand, in the present embodiment, since the combined frame images FA to FD are generated based on the two sets of frame images P1 to P8 and Q1 to Q8, the video image supply cycle T0 can be shortened, as shown in Figs. 9A to 9G. The viewer will less likely feel that displayed video images flicker, whereby degradation in image quality can be reduced.

### (Advantageous effect)

In the present embodiment described above, since combined frame images are generated based on two sets of frame images, the viewer will less likely have a sense of flickering while benefiting from increased resolution, whereby the image quality can be increased.

### [Variation 1-1]

In the embodiment described above, in which the open/close units 12A to 12D are sequentially opened or closed in this order in a time division manner, the open/close operation is not necessarily performed this way. The open/close units 12A to 12D may be opened or closed in a different order. An example of such operation will be described below.

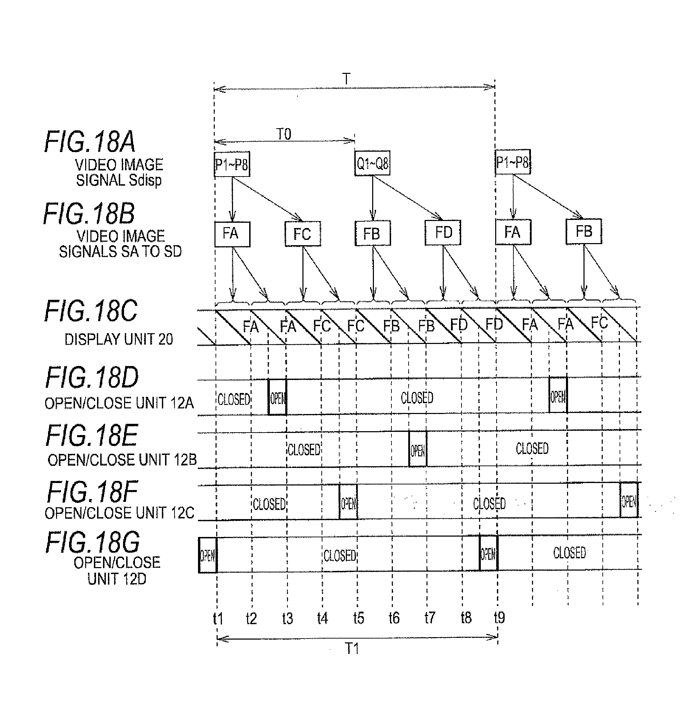

Figs. 18A to 18G are timing charts based on which a stereoscopic display apparatus according to the present variation displays video images. Fig. 18A shows a video image signal Sdisp. Fig. 18B show video image signals SA to SD. Fig. 18C shows the operation of the display unit 20. Figs. 18D to 18G show the operation of the open/close units 12A to 12D in the liquid crystal barrier unit 10, respectively. The open/close units 12A to 12D are opened or closed in the order of the open/close unit 12A, the open/close unit 12C, the open/close unit 12B, and the open/close unit 12D (Figs. 18D to 18G). In accordance with the open/close operation described above, a combined image generator according to the present variation generates combined frame images FA and FC from frame images P1 to P8 and generates combined frame images FB and FD from frame images Q1 to Q8 supplied at the following timing (Figs. 18A and 18B). The display unit 20 then sequentially displays the combined frame images FA, FC, FB, and FD in a time division manner (Fig. 18C).

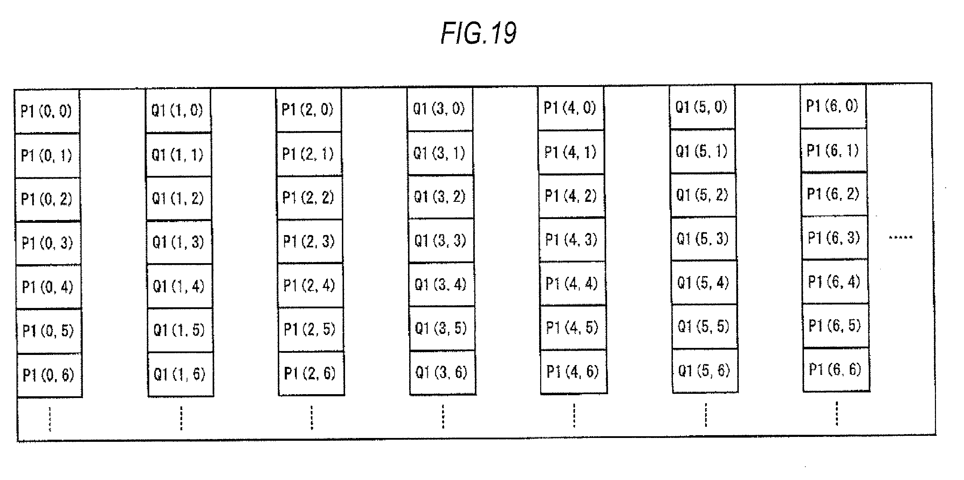

Fig. 19 shows a pixel information layout of a visually recognized image in the stereoscopic display apparatus according to the present variation. The stereoscopic display apparatus performs display operation in such a way that the viewer visually recognizes an image formed of pieces of pixel information P1(0,n), Q1 (1,n), P1 (2, n), Q1(3,n), P1 (4,n), Q1(5,n), P1 (6,n),... arranged from left to right across the display screen, as shown in Fig. 19. The pieces of pixel information P1 (0,n), P1(4,n),... are displayed based on the combined frame image FA when the open/close units 12A are open, and the pieces of pixel information Q1 (1,n), Q1(5,n),... are displayed based on the combined frame image FB when the open/close units 12B are open. Similarly, the pieces of pixel information P1(2,n), P1(6,n),... are displayed based on the combined frame image FC when the open/close units 12C are open, and the pieces of pixel information Q1(3,n)... are displayed based on the combined frame image FD when the open/close units 12D are open.

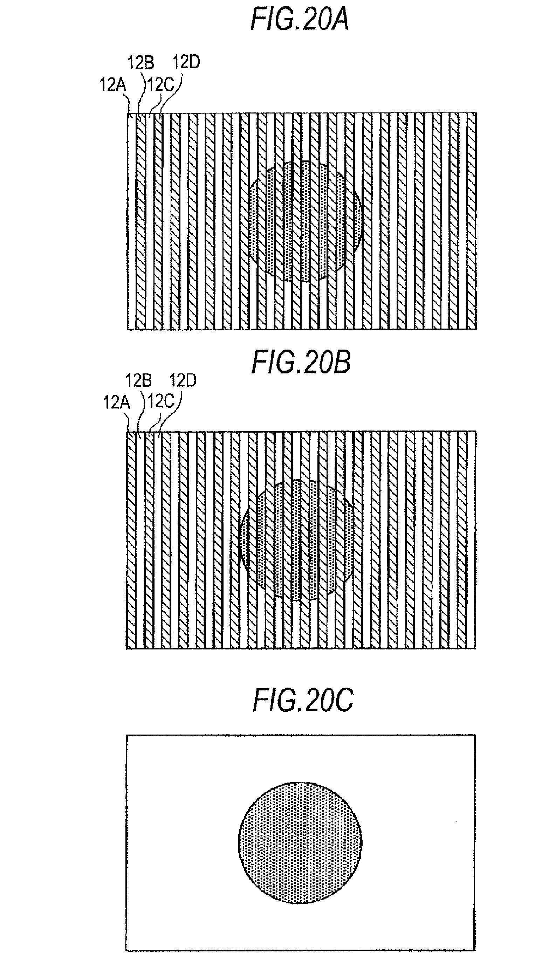

Figs. 20A to 20C show an example of how the stereoscopic display apparatus according to the present variation displays video images. Fig. 20A shows an image visually recognized in a display period based on the frame images P1 to P8. Fig. 20B shows an image visually recognized in a display period based on the frame images Q1 to Q8. Fig. 20C shows an image visually recognized in a single operation cycle period. The display period based on the frame images P1 to P8 corresponds to the period from the timing t1 to t5 in Figs. 18A to 18G, and the display period based on the frame images Q1 to Q8 corresponds to the period from the timing t5 to t9 in Figs. 18A to 18G. The single operation cycle period corresponds to the period from the timing t1 to t9 in Figs. 18A to 18G.

In the present variation, when the frame images P1 to P8 are supplied, the stereoscopic display apparatus displays the combined frame images FA and FC through the open/close units 12A and 12C, as shown in Fig. 20A. When the frame images Q1 to Q8 supplied at a timing different from that for the frame images P1 to P8 are supplied, the stereoscopic display apparatus displays the combined frame images FB and FD through the open/close units 12B and 12D, as shown in Fig. 20B. That is, the stereoscopic display apparatus 1 according to the embodiment described above displays frame images supplied at the same timing through two open/close units 12 adjacent to each other, as shown in Figs. 11A and 11B, whereas the stereoscopic display apparatus according to the present variation displays frame images supplied at the same timing through two open/close units 12 set apart from each other, as shown in Figs. 20A and 20B. The thus configured stereoscopic display apparatus according to the present variation provides an enhanced interlaced display-like effect as compared with that provided by the stereoscopic display apparatus 1 according to the embodiment described above, which is advantageous in a case where faster motion images are displayed because smooth video images with reduced degree of flickering can be displayed.

### [Variation 1-2]

In the embodiment described above, the liquid crystal barrier unit 10 is formed of the open/close units 12 grouped into four, but the liquid crystal barrier unit 10 is not limited to this. Instead, for example, the liquid crystal barrier unit 10 may be formed of open/close units 12 grouped into six. In this case, after the combined image generator 45 may, for example, generate six combined frame images by combining three sets of frame images different from each other, the display unit 20 may sequentially display the six combined frame images in a time division manner, and the grouped open/close units 12 may be opened or closed in a time division manner in synchronization with the display operation.

### <2. Second Embodiment>

A stereoscopic display apparatus 2 according to a second embodiment of the present disclosure will next be described. The present embodiment provides a display apparatus having three barrier groups and performing stereoscopic display based on six viewpoint video images. That is, the liquid crystal barrier unit 10 grouped into the four barrier groups A to D is used to configure the stereoscopic display apparatus 1 in the first embodiment, whereas a liquid crystal barrier unit 60 grouped into three barrier groups A to C is used to configure the stereoscopic display apparatus 2 in the present embodiment. The other components are the same as those in the first embodiment described above (Fig. 1 and other figures). Substantially the same components as those in the stereoscopic display apparatus 1 according to the first embodiment described above have the same reference characters, and no description of these components will be made as appropriate.

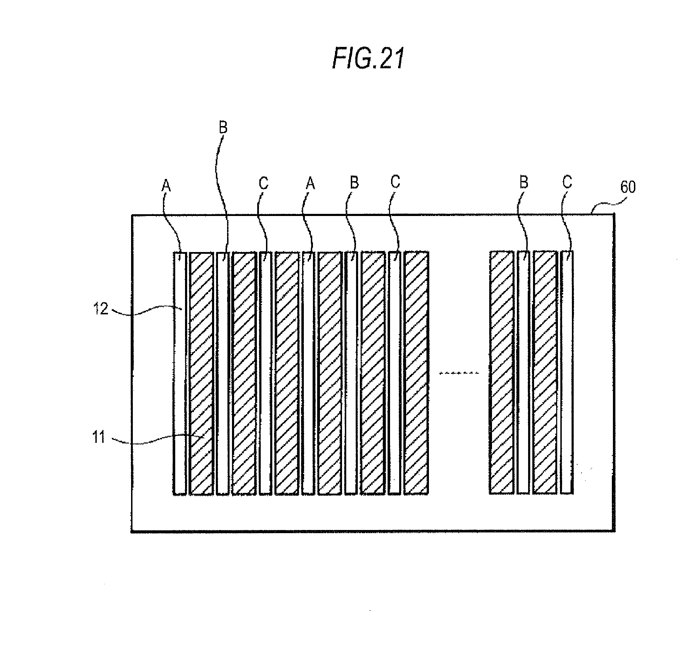

Fig. 21 shows an example of the grouping of open/close units 12 in the liquid crystal barrier unit 60. In this example, the open/close units 12 are so grouped that three groups A to C cyclically appear along the x-axis direction.

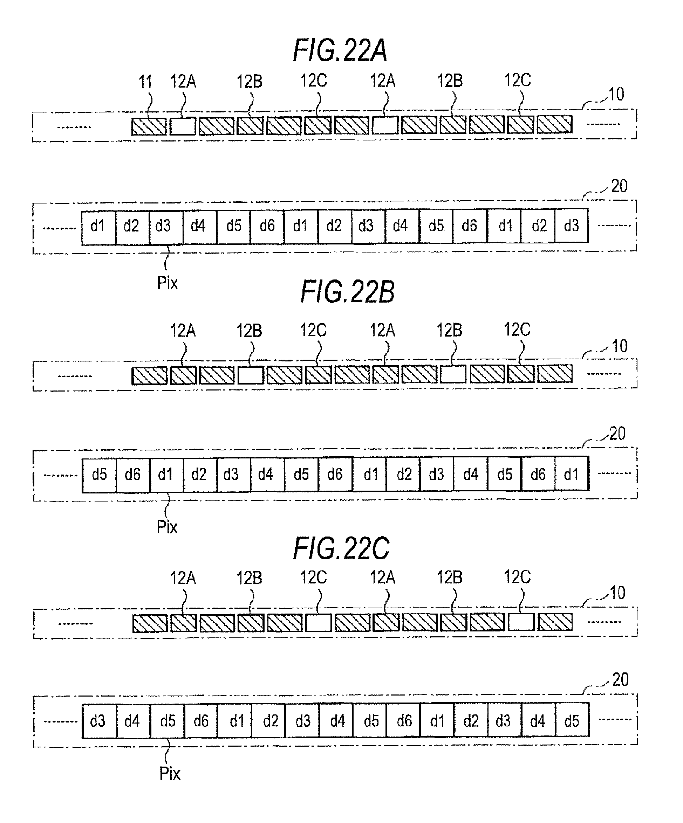

Figs. 22A to 22C show an example of how the liquid crystal barrier unit 60 and the display unit 20 in the stereoscopic display apparatus 2 operate. Figs. 22A to 22C show three states of the liquid crystal barrier unit 60 and the display unit 20 in the stereoscopic display mode. In this example, the open/close units 12A are so provided that the ratio thereof to the pixels Pix in the display unit 20 is one to six. Similarly, the open/close units 12B and 12C are so provided that the ratio thereof to the pixels Pix in the display unit 20 is one to six.

When a video image signal SA (combined frame images FA1, and FA2, which will be described later) is supplied, the open/close units 12A are opened, whereas the other open/close units 12 are closed, as shown in Fig. 22A. In the display unit 20, six pixels Pix disposed adjacent to each other in positions corresponding to each of the open/close units 12A display six viewpoint video images contained in the video image signal SA (pixel information d1 to d6). Similarly, when a video image signal SB (combined frame images FB1 and FB2, which will be described later) is supplied, the open/close units 12B are opened, whereas the other open/close units 12 are closed, as shown in Fig. 22B. In the display unit 20, six pixels Pix disposed adjacent to each other in positions corresponding to each of the open/close units 12B display six viewpoint video images contained in the video image signal SB (pixel information d1 to d6). When a video image signal SC (combined frame images FC1 and FC2, which will be described later) is supplied, the open/close units 12C are opened, whereas the other open/close units 12 are closed, as shown in Fig. 22C. In the display unit 20, six pixels Pix disposed adjacent to each other in positions corresponding to each of the open/close units 12C display six viewpoint video images contained in the video image signal SC (pixel information d1 to d6).

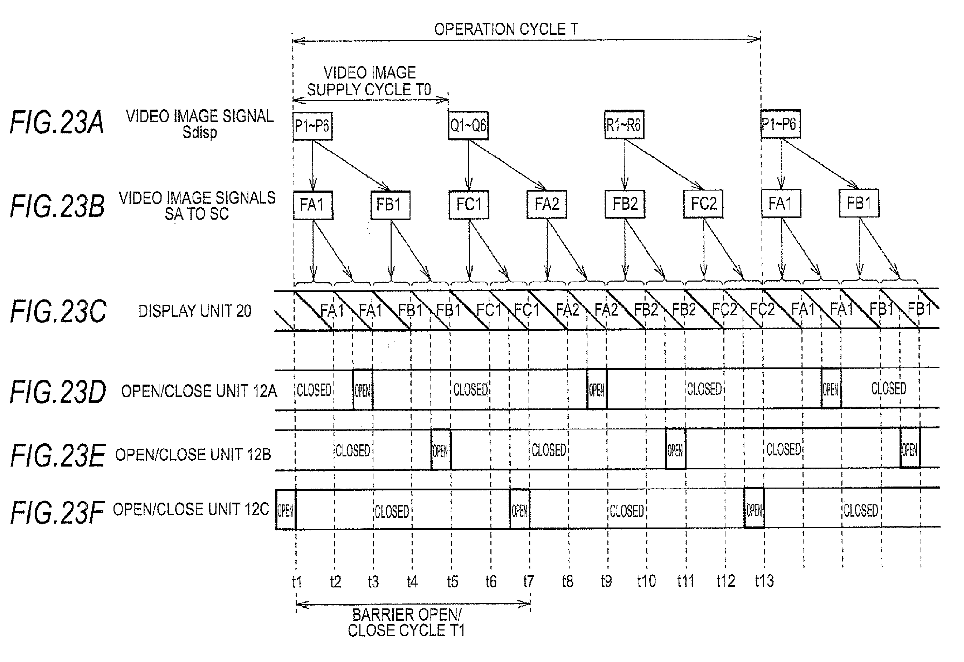

Figs. 23A to 23F are timing charts based on which the stereoscopic display apparatus 2 displays video images. Fig. 23A shows the video image signal Sdisp. Fig. 23B show the video image signals SA to SC. Fig. 23C shows the operation of the display unit 20. Figs. 23D to 23F show the operation of the open/close units 12A to 12C in the liquid crystal barrier unit 60, respectively.

The stereoscopic display apparatus 2 is supplied with viewpoint video images corresponding to six viewpoints (frame images P1 to P6, Q1 to Q6, and R1 to R6) in the form of video image signal Sdisp for each video image supply cycle T0. In the stereoscopic display apparatus 2, the combined image generator 45 generates combined frame images FA1, FB1, FC1, FA2, FB2, and FC2 based on the three sets of frame images P1 to P6, Q1 to Q6, R1 to R6 different from one another, and the display unit 20 sequentially displays the combined frame images in a time division manner. The open/close units 12A to 12C are opened or closed at the barrier open/close cycle T1 in synchronization with the display operation. That is, a period corresponding to three video image supply cycles T0 is equal to a period corresponding to two barrier open/close cycles T1. The stereoscopic display apparatus 2 repeats the operation described above for each operation cycle T. The video image supply cycle T0 is, for example, about 16.7 [msec] (=1/60 [Hz]). In this case, the barrier open/close cycle T1 is, for example, about 25 [msec] (=1/40 [Hz]), and the operation cycle T is, for example, about 50 [msec] (=1/20 [Hz]). The above operation will be described below in detail.

The stereoscopic display apparatus 2 displays the combined frame image FA1 in the period from the timing t1 to t3. The combined image generator 45 first generates the combined frame image FA1 (video image signal SA) based on the frame images P1 to P6 (Fig. 23B). The display unit 20 displays the combined frame image FA1 twice in succession (Fig. 23C). In the liquid crystal barrier unit 60, the open/close units 12A are open after the liquid crystal molecules in the display unit 20 have responded in the period from the timing t2 to t3 (Fig. 23D). The viewer can therefore view the displayed combined frame image FA1.

The stereoscopic display apparatus 2 then displays the combined frame image FB1 in the period from the timing t3 to t5. The combined image generator 45 first generates the combined frame image FB1 (video image signal SB) based on the frame images P1 to P6 (Fig. 23B). The display unit 20 then displays the combined frame image FB1 twice in succession (Fig. 23C). In the liquid crystal barrier unit 60, the open/close units 12B are open after the liquid crystal molecules in the display unit 20 have responded in the period from the timing t4 to t5 (Fig. 23E). The viewer can therefore view the displayed combined frame image FB1.

The stereoscopic display apparatus 2 then displays the combined frame image FC1 in the period from the timing t5 to t7. The combined image generator 45 first generates the combined frame image FC1 (video image signal SC) based on newly supplied frame images Q1 to Q6 (Fig. 23B). The display unit 20 then displays the combined frame image FC1 twice in succession (Fig. 23C). In the liquid crystal barrier unit 60, the open/close units 12C are open after the liquid crystal molecules in the display unit 20 have responded in the period from the timing t6 to t7 (Fig. 23F). The viewer can therefore view the displayed combined frame image FC1.

The stereoscopic display apparatus 2 then displays the combined frame image FA2 in the period from the timing t7 to t9. The combined image generator 45 first generates the combined frame image FA2 (video image signal SA) based on the frame images Q1 to Q6 (Fig. 23B). The display unit 20 then displays the combined frame image FA2 twice in succession (Fig. 23C). In the liquid crystal barrier unit 60, the open/close units 12A are open after the liquid crystal molecules in the display unit 20 have responded in the period from the timing t8 to t9 (Fig. 23D). The viewer can therefore view the displayed combining frame image FA2.

The stereoscopic display apparatus 2 then displays the combined frame image FB2 in the period from the timing t9 to t11. The combined image generator 45 first generates the combined frame image FB2 (video image signal SB) based on newly supplied frame images R1 to R6 (Fig. 23B). The display unit 20 then displays the combined frame image FB2 twice in succession (Fig. 23C). In the liquid crystal barrier unit 60, the open/close units 12B are open after the liquid crystal molecules in the display unit 20 have responded in the period from the timing t10 to t11 (Fig. 23E). The viewer can therefore view the displayed combined frame image FB2.

The stereoscopic display apparatus 2 then displays the combined frame image FC2 in the period from the timing t11 to t13. The combined image generator 45 first generates the combined frame image FC2 (video image signal SC) based on the frame images R1 to R6 (Fig. 23B). The display unit 20 then displays the combined frame image FC2 twice in succession (Fig. 23C). In the liquid crystal barrier unit 60, the open/close units 12C are open after the liquid crystal molecules in the display unit 20 have responded in the period from the timing t12 to t13 (Fig. 23F). The viewer can therefore view the displayed combined frame image FC2.

By repeating the operation described above, the stereoscopic display apparatus 2 generates the combined frame images FA to FC based on the frame images P1 to P6, Q1 to Q6, and R1 to R6 supplied at timings different from each other in the form of video image signal Sdisp and sequentially displays the combined frame images FA1 and FA2 (through open/close units 12A), the combined frame images FB1 and FB2 (through open/close units 12B), and the combined frame image FC1 and FC2 (through open/close units 12C) in a time division manner.

The combining operation performed by the combined image generator 45 will next be described.

In the stereoscopic display apparatus 2, the combined image generator 45 combines the frame images P1 to P6 out of the supplied viewpoint video images to generate the combined frame images FA1 and FB1, combines the frame images Q1 to Q6 supplied at the following timing to generate the combined frame images FC1 and FA2, and combines the frame images R1 to R6 supplied at the following timing to generate the combined frame images FB2 and FC2. The frame images P1 to P6, Q1 to Q6, and R1 to R6 are the same as those shown in Figs. 12 and 14, and they are therefore not described in detail below.

Generation of the combined frame images FA1 and FB1 will first be described.

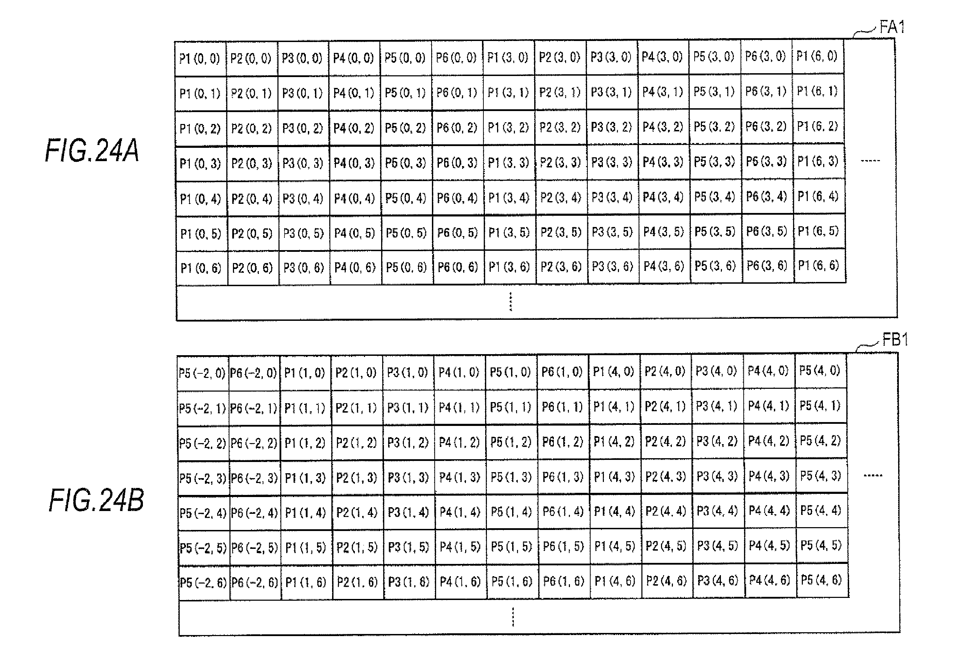

Fig. 24A shows a pixel information layout in the combined frame image FA1, and Fig. 24B shows a pixel information layout in the combined frame image FB1. The combined image generator 45 selects pixel information disposed in every three columns of each of the frame images P1 to P6 and generates the combined frame images FA1 and FB1 based on the selected pieces of pixel information.

To generate the combined frame image FA1, the combined image generator 45 first selects the pixel information disposed in the zero-th column of each of the frame images P1 to P6 (P1(0,n), P2 (0,n),.., P6 (0,n)) and arranges the selected pieces of pixel information in the combined frame image FA1 from left to right, as shown in Fig. 24A. The combined image generator 45 then selects the pixel information disposed in the third column of each of the frame images P1 to P6 (P1(3,n), P2(3,n),..., P6(3,n)) and arranges the selected pieces of pixel information immediately after the pixel information having been arranged. The combined image generator 45 generates the combined frame image FA1 by repeating the process described above. The pieces of pixel information in the combined frame image FA1 correspond to the pieces of pixel information shown in Fig. 22A. Specifically, for example, the pieces of pixel information P1(0,n), P1(3,n),... in the combined frame image FA1 correspond to the pieces of pixel information d1 shown in Fig. 22A, and the pieces of pixel information P2(0,n), P2(3,n),... in the combined frame image FA1 correspond to the pieces of pixel information d2 shown in Fig. 22A.

To generate the combined frame image FB1, the combined image generator 45 first disposes dummy pixel information P5(-2,n) and P6(-2,n), selects the pixel information disposed in the first column of each of the frame images P1 to P6(P1(1,n), P2(,n),..., P6(1,n)), and arranges the selected pieces of pixel information in the combined frame image FB1 from left to right, as shown in Fig. 24B. The combined image generator 45 then selects the pixel information disposed in the fourth column of each of the frame images P1 to P6 (P1(4,n), P2(4, n),..., P6(4, n)) and arranges the selected pieces of pixel information immediately after the pixel information having been arranged. The combined image generator 45 generates the combined frame image FB1 by repeating the process described above. The pieces of pixel information in the combined frame image FB1 correspond to the pieces of pixel information shown in Fig. 22B. Specifically, for example, the pieces of pixel information P1(1,n), P1 (4,n),... in the combined frame image FB1 correspond to the pieces of pixel information d1 shown in Fig. 22B, and the pieces of pixel information P2 (1,n), P2 (4,n) ,... in the combined frame image FB1 correspond to the pieces of pixel information d2 shown in Fig. 22B.

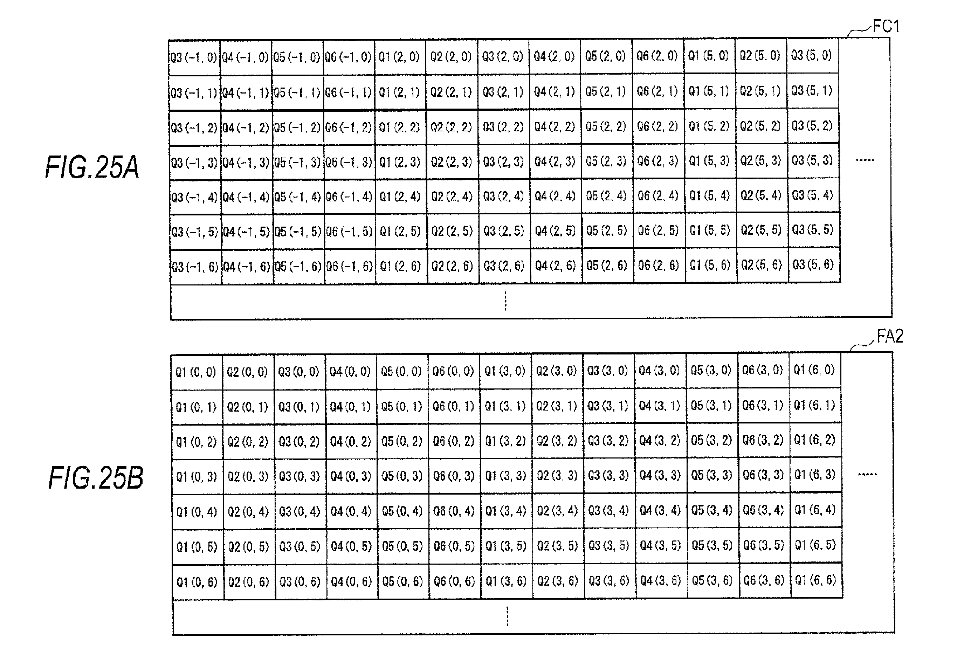

Fig. 25A shows a pixel information layout in the combined frame image FC1, and Fig. 25B shows a pixel information layout in the combined frame image FA2. The combined image generator 45 selects pixel information disposed in every three columns of each of the frame images Q1 to Q6 and generates the combined frame images FC1 and FA2 based on the selected pieces of pixel information.

To generate the combined frame image FC1, the combined image generator 45 first disposes dummy pixel information Q3(-1,n), Q4(-1,n), Q5(-1,n), and Q6(-1,n), selects the pixel information disposed in the second column of each of the frame images Q1 to Q6 (Q1(2,n), Q2(2,n),..., Q6(2,n)), and arranges the selected pieces of pixel information in the combined frame image FC1 from left to right, as shown in Fig. 25A. The combined image generator 45 then selects the pixel information disposed in the fifth column of each of the frame images Q1 to Q6 (Q1(5,n), Q2 (5,n),..., Q6(5,n)) and arranges the selected pieces of pixel information immediately after the pixel information having been arranged. The combined image generator 45 generates the combined frame image FC1 by repeating the process described above. The pieces of pixel information in the combined frame image FC1 correspond to the pieces of pixel information shown in Fig. 22C. Specifically, for example, the pieces of pixel information Q1 (2,n), Q1 (5,n),... in the combined frame image FC1 correspond to the pieces of pixel information d1 shown in Fig. 22C, and the pieces of pixel information Q2 (2,n), Q2(5,n),... in the combined frame image FC1 correspond to the pieces of pixel information d2 shown in Fig. 22C.

To generate the combined frame image FA2, the combined image generator 45 first selects the pixel information disposed in the zero-th column of each of the frame images Q1 to Q6 (Q1 (0,n), Q2(0,n),..., Q6(0,n)) and arranges the selected pieces of pixel information in the combined frame image FA2 from left to right, as shown in Fig. 25B. The combined image generator 45 then selects the pixel information disposed in the third column of each of the frame images Q1 to Q6 (Q1(3,n), Q2(3,n),..., Q6(3,n)) and arranges the selected pieces of pixel information immediately after the pixel information having been arranged. The combined image generator 45 generates the combined frame image FA2 by repeating the process described above. The pieces of pixel information in the combined frame image FA2 correspond to the pieces of pixel information shown in Fig. 22A. Specifically, for example, the pieces of pixel information Q1(0,n), Q1 (3,n),... in the combined frame image FA2 correspond to the pieces of pixel information d1 shown in Fig. 22A, and the pieces of pixel information Q2 (0,n), Q2(3,n),... in the combined frame image FA2 correspond to the pieces of pixel information d2 shown in Fig. 22A.

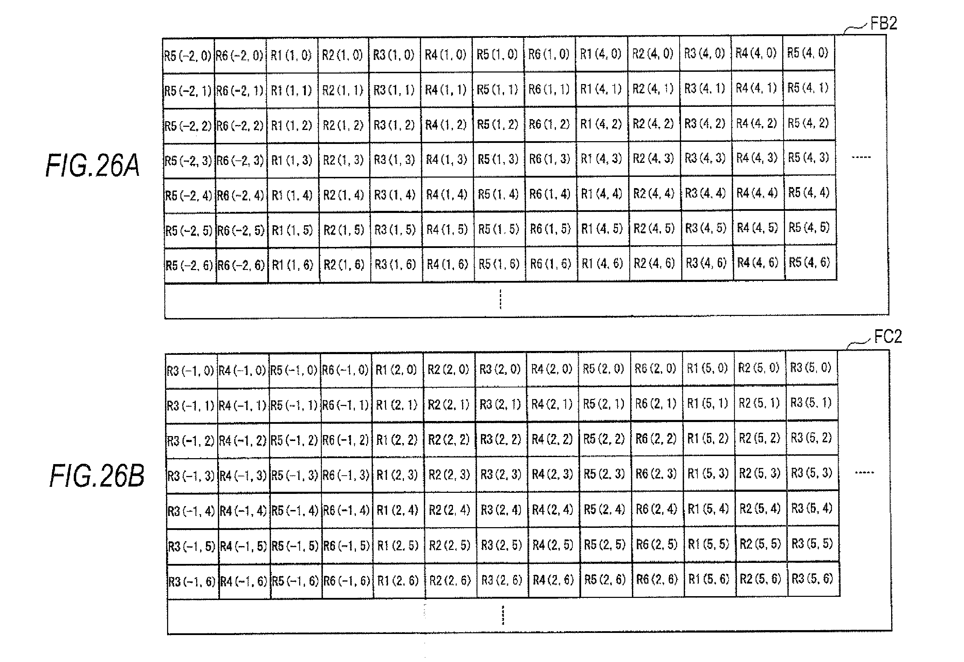

Fig. 26A shows a pixel information layout in the combined frame image FB2, and Fig. 26B shows a pixel information layout in the combined frame image FC2. The combined image generator 45 selects pixel information disposed in every three columns of each of the frame images R1 to R6 and generates the combined frame images FB2 and FC2 based on the selected pieces of pixel information.

To generate the combined frame image FB2, the combined image generator 45 first disposes dummy pixel information R5 (-2,n) and R6(-2,n), selects the pixel information disposed in the first column of each of the frame images R1 to R6 (R1(1,n), R2(1,n),..., R6(1,n)), and arranges the selected pieces of pixel information in the combined frame image FB2 from left to right, as shown in Fig. 26A. The combined image generator 45 then selects the pixel information disposed in the fourth column of each of the frame images R1 to R6 (R1(4,n), R2(4,n),..., R6(4,n)) and arranges the selected pieces of pixel information immediately after the pixel information having been arranged. The combined image generator 45 generates the combined frame image FB2 by repeating the process described above. The pieces of pixel information in the combined frame image FB2 correspond to the pieces of pixel information shown in Fig. 22B. Specifically, for example, the pieces of pixel information R1(1,n), R1(4,n),... in the combined frame image FB2 correspond to the pieces of pixel information d1 shown in Fig. 22B, and the pieces of pixel information R2 (1,n), R2(4,n),... in the combined frame image FB2 correspond to the pieces of pixel information d2 shown in Fig. 22B.

To generate the combined frame image FC2, the combined image generator 45 first disposes dummy pixel information R3 (-1,n), R4(-1,n), R5(-1,n), and R6(-1,n), selects the pixel information disposed in the second column of each of the frame images R1 to R6 (R1(2,n), R2(2,n),..., RC(2,n)), and arranges the selected pieces of pixel information in the combined frame image FC2 from left to right, as shown in Fig. 26B. The combined image generator 45 then selects the pixel information disposed in the fifth column of each of the frame images R1 to R6 (R1(5,n), R2(5,n),..., R6(5,n)) and arranges the selected pieces of pixel information immediately after the pixel information having been arranged. The combined image generator 45 generates the combined frame image FC2 by repeating the process described above. The pieces of pixel information in the combined frame image FC2 correspond to the pieces of pixel information shown in Fig. 22C. Specifically, for example, the pieces of pixel information R1 (2,n), R1 (5,n) ,... in the combined frame image FC2 correspond to the pieces of pixel information d1 shown in Fig. 22C, and the pieces of pixel information R2 (2, n), R2(5,n),... in the combined frame image FC2 correspond to the pieces of pixel information d2 shown in Fig. 22C.

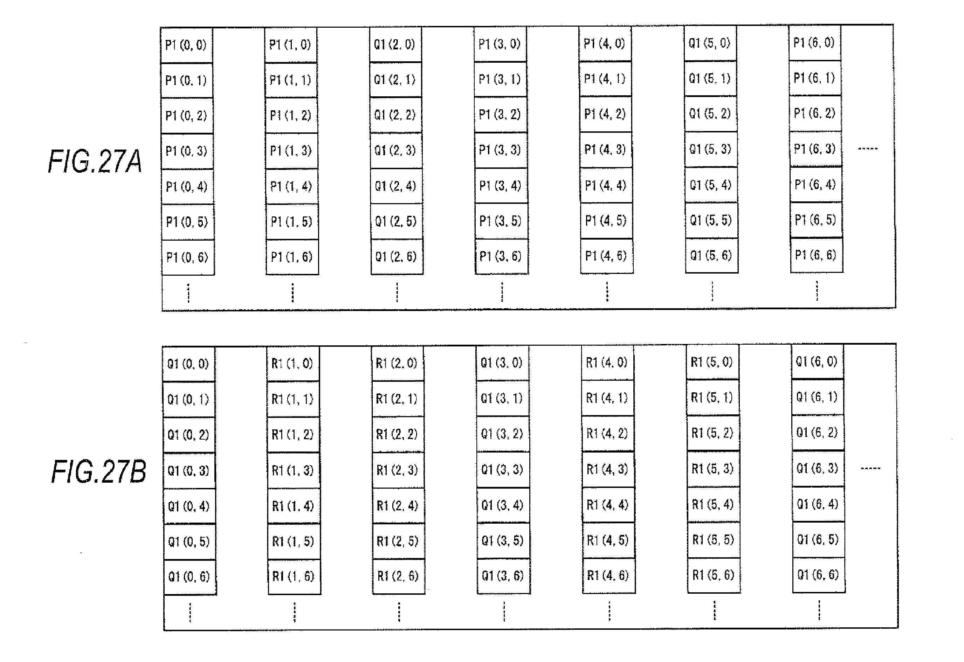

Figs. 27A and 27B show pixel information layouts in visually recognized images. Fig. 27A shows a pixel information layout in the period from the timing t1 to t7 shown in Figs. 23A to 23F, and Fig. 27B shows a pixel information layout in the period from the timing t7 to t13 shown in Figs. 23A to 23F. In this example, it is assumed that the viewer looks at one of the six viewpoint images (frame images P1, Q1, R1 in this example) with one of the eyes, as in Fig. 16.

The stereoscopic display apparatus 2 performs display operation in the period from the timing t1 to t7 shown in Figs. 23A to 23F in such a way that the viewer visually recognizes an image formed of pieces of pixel information P1(0,n), P1 (1,n), Q1 (2,n), P1 (3,n), P1(4,n), Q1 (5,n),... arranged from left to right across the display screen, as shown in Fig. 27A. The pieces of pixel information P1(0,n), P1(3,n),.., are displayed based on the combined frame image FA1 (Fig. 24A) when the open/close units 12A are open. Similarly, the pieces of pixel information P1(1,n), P1(4,n),... are displayed based on the combined frame image FB1 (Fig. 24B) when the open/close units 12B are open, and the pieces of pixel information Q1(2,n), Q1 (5,n),... are displayed based on the combined frame image FC1 (Fig. 25A) when the open/close units 12C are open.

The stereoscopic display apparatus 2 further performs display operation in the period from the timing t7 to t13 shown in Figs. 23A to 23F in such a way that the viewer visually recognizes an image formed of pieces of pixel information Q1(0,n), R1(1,n), R1(2,n), Q1(3,n), R1(4,n), R1 (5,n),... arranged from left to right across the display screen, as shown in Fig. 27B. The pieces of pixel information Q1(0,n), Q1(3,n),... are displayed based on the combined frame image FA2 (Fig. 25B) when the open/close units 12A are open. Similarly, the pieces of pixel information R1(1,n), R1(4,n),... are displayed based on the combined frame image FB2 (Fig. 26A) when the open/close units 12B are open, and the pieces of pixel information R1 (2,n), R1 (5,n),... are displayed based on the combined frame image FC2 (Fig. 26B) when the open/close units 12C are open.

As described above, displaying video images by switching the state of each of the three groups of the open/close units 12A to 12C to the open state in a time division manner allows the stereoscopic display apparatus 2 to achieve resolution three times as high as the resolution achieved when only the open/close units 12A are provided. In other words, the resolution of the stereoscopic display apparatus 2 is only reduced to one-half (=1/6x3) the resolution achieved in the two-dimensional display mode.

### [Advantageous effect]

In the present embodiment described above, since combined frame images are generated based on three sets of frame images, the viewer will less likely have a sense of flickering while benefiting from increased resolution even when three barrier groups are provided, whereby the image quality can be increased.

The present disclosure has been described with reference to several embodiments and variations, but the present disclosure is not limited thereto, and a variety of changes can be made thereto.

For example, in the embodiments and variations described above, the liquid crystal barrier unit 10 is formed of the open/close units 12 grouped into four (first embodiment) or the open/close units 12 grouped into three (second embodiment), but the liquid crystal barrier unit 10 is not necessarily configured this way. A description will be made of a case where the open/close units 12 are grouped into two.

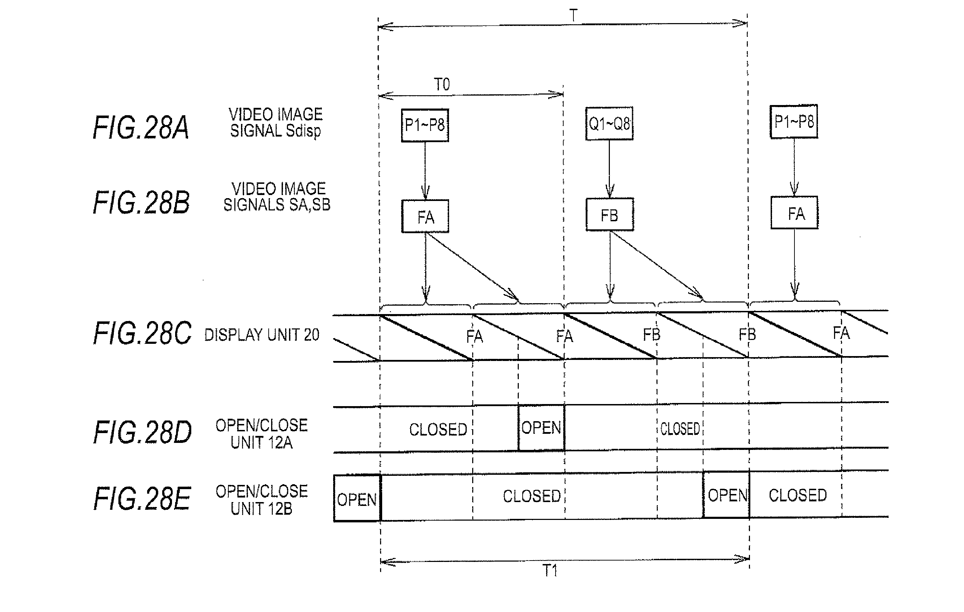

Figs. 28A to 28E are timing charts based on which video images are displayed in a case where the liquid crystal barrier unit is formed of the open/close units 12 are grouped into two. A stereoscopic display apparatus is supplied with viewpoint video images corresponding to eight viewpoints (frame images P1 to P8 and Q1 to Q8) in the form of video image signal Sdisp for each video image supply cycle T0. The combined image generator 45 generates a combined frame image FA based on the frame images P1 to P8 and generates a combined frame image FB based on the frame images Q1 to Q8 different from the frame images P1 to P8, and the display unit 20 sequentially displays the combined frame images in a time division manner. The open/close units 12A and 12B are opened or closed at the barrier open/close cycle T1 in synchronization with the display operation. That is, a period corresponding to two video image supply cycles T0 is equal to a period corresponding to the barrier open/close cycle T1.

The drive method described above can be used, for example, when the display unit 20 is formed of a liquid crystal apparatus that operates at a slow response speed.

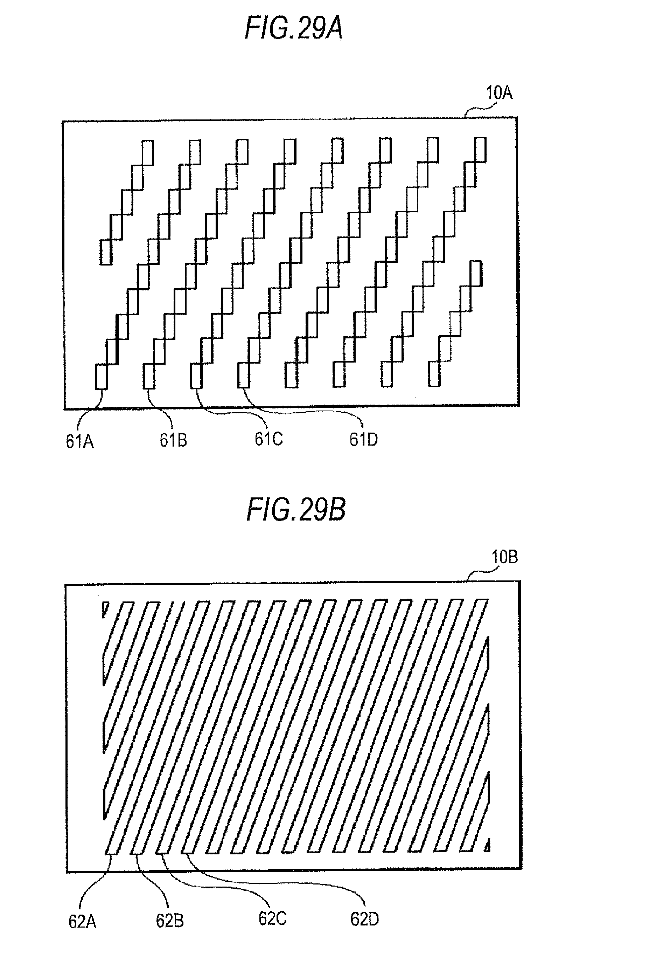

For example, in the embodiments and variations described above, the open/close units in the liquid crystal barrier unit extend in the y-axis direction, but the open/close units does not necessarily extend in the y-axis direction. For example, the open/close units may be arranged in a step barrier form shown in Fig. 29A or in an oblique barrier form shown in Fig. 29B. JP-A-2004-264762 describes an example of the step barrier form, and JP-A-2005-86506 describes an example of the oblique barrier form. Using either of the variations of the barrier improves the balance between the resolution along the x-axis direction and the resolution along the y-axis direction across the display screen of the stereoscopic display apparatus and reduces the amount of moire.

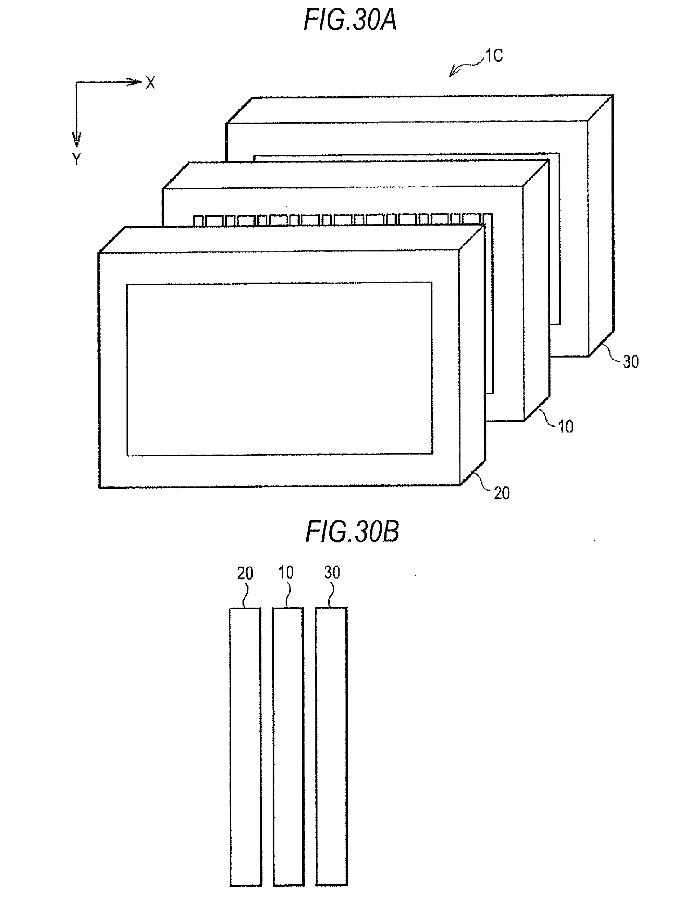

Further, for example, in the embodiments and variations described above, the backlight 30, the display unit 20, and the liquid crystal barrier unit 10 are disposed in this order in the stereoscopic display apparatus, but the order is not limited thereto. Instead, for example, they may be disposed in the following order: the backlight 30, the liquid crystal barrier unit 10, and the display unit 20 as shown in Figs. 30A and 30B.

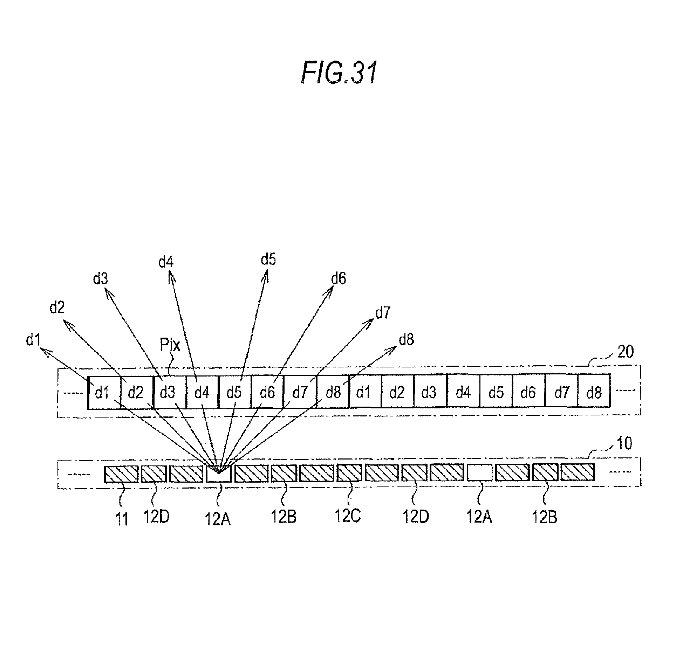

Fig. 31 shows an example of how the display unit 20 and the liquid crystal barrier unit 10 according to the present variation operate to display a combined frame image FA. Fig. 31 shows a case where the present variation is applied to the stereoscopic display apparatus 1 according to the first embodiment described above. In the present variation, the light emitted from the backlight 30 is first incident on the liquid crystal barrier unit 10. The portion of the light that passes through any of the open/close units 12A to 12D is then modulated by the display unit 20 and outputted as eight viewpoint video images.

Further, for example, in the embodiments and variations described above, the backlight is kept turned on but is not necessarily operated this way. Instead, for example, the backlight may alternately be turned on and off repeatedly at a fixed cycle. This operation is, for example, applicable to a case where it takes a long period for the open/close units 12 (12A, 12B) in the liquid crystal barrier unit 10 to respond. A description will be made of a case where the present variation is applied to the stereoscopic display apparatus 1 according to the first embodiment described above.

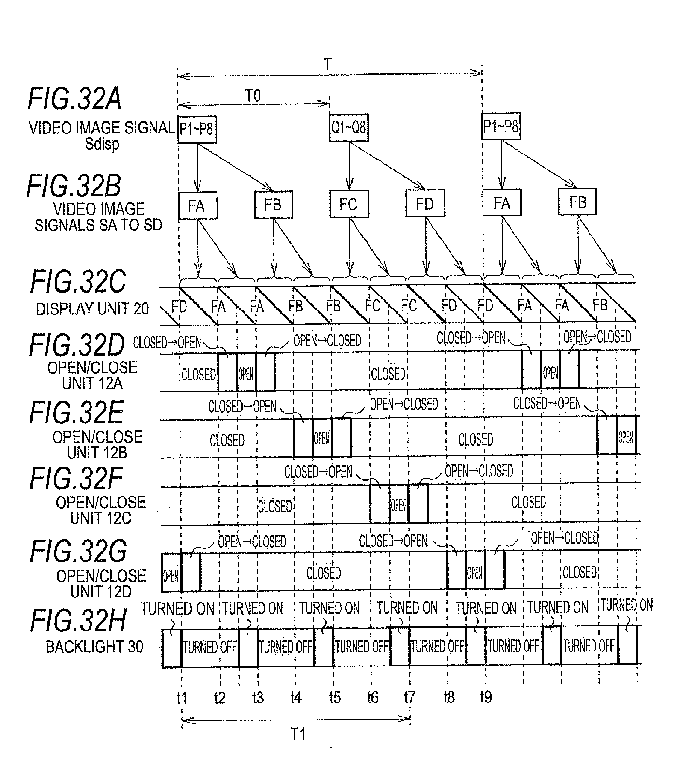

Figs. 32A to 32H are timing charts based on which a stereoscopic display apparatus 1D according to the present variation displays video images. In Figs. 32D to 32G, "open→closed" represents that the state of the open/close units 12 (12A to 12D) is changed from the open state to the closed state, and "closed→open" represents that the state of the open/close units 12 is changed from the closed state to the open state. The labels "open→closed" and "closed→open" correspond to periods during which the liquid crystal molecules in the open/close units 12 in the liquid crystal barrier unit 10 are responding. The backlight 30 is kept turned on during periods in which the open/close units 12 are open whereas being kept turned off during the other periods. The viewer will therefore not see display during the transient changing state of the open/close unit 12 like "open→closed" or "closed→open", whereby degradation in image quality can be reduced.

Further, for example, in the embodiments and variations described above, the backlight 30 supplies the entire surface of the display unit 20 with light in the form of surface emission but does not necessarily do so. Instead, for example, the backlight may be divided into a plurality of areas, each of which independently supplies the display unit 20 with light. A description will be made of a case where the backlight is divided into two areas.

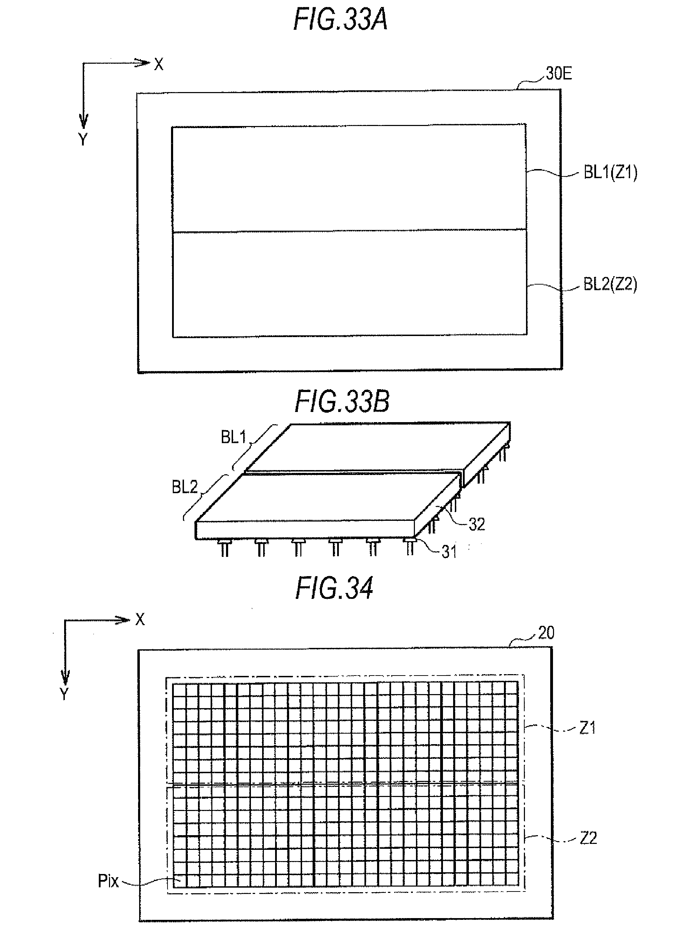

Figs. 33A and 33B show an example of the configuration of a backlight 30E according to the present variation. Fig. 33A is a plan view of the backlight 30E, and Fig. 33B is a perspective view of a key portion of the backlight 30E. Fig. 34 shows areas Z1 and Z2 in the display unit 20. The backlight 30E has two light emitters BL1 and BL2 arranged in the y-axis direction (line sequential scan direction in display unit 20) as shown in Fig. 33A and capable of emitting light independent from each other. Each of the light emitters BL1 and BL2 includes light sources 31 and a light guide plate 32, as shown in Fig. 33B. Each of the light sources 31 is formed of an LED in this example. The light guide plate 32 functions as a diffuser that diffuses light emitted from the light sources 31 to substantially homogenize the light emitted from each of emitters BL1 and BL2 in the form of surface emission. The light emitters BL1 and BL2 are disposed in positions corresponding to the areas Z1 and Z2 in the display unit 20. In this example, each of the light sources 31 is formed of an LED but not limited thereto. Instead, each of the light sources 31 may be formed, for example, of a CCFL.

To allow the light emitters BL1 and BL2 to emit light independent from each other, the backlight 30E is so configured that no light leaks between the light emitters BL1 and BL2. Specifically, light emitted from a light source 31 is incident only on the light guide plate 32 corresponding to the light source 31. The light incident on the light guide plate 32 is totally reflected off the side surfaces of the light guide plate 32, whereby no light leaks through the side surfaces to the adjacent light guide plate 32. The total reflection is achieved specifically by adjusting the position of each of the light sources 31 or forming a reflective layer that reflects light on each of the side surfaces of the light guide plate 32.

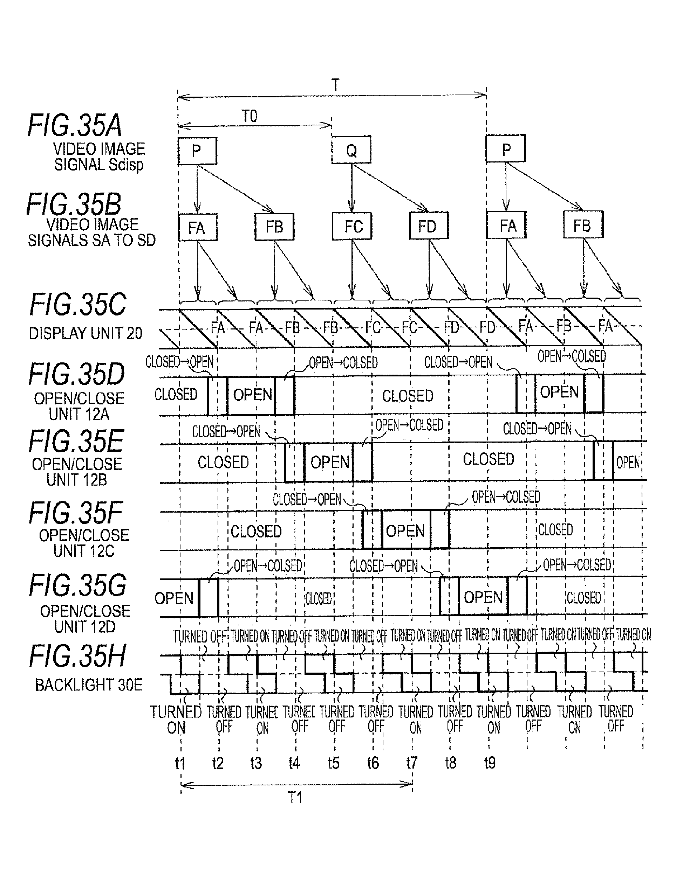

Figs. 35A to 35H are timing charts based on which a stereoscopic display apparatus 1E according to the present variation displays video images. Fig. 35A to 35H show a case where the present variation is applied to the stereoscopic display apparatus 1 according to the first embodiment described above. In the stereoscopic display apparatus 1E, the backlight 30 is divided with respect to the line sequential scan direction in the display unit 20, and the divided backlights emit light independent from one another in synchronization with the scan operation. In this way, since the period during which each of the areas Z1 and Z2 in the display unit 20 is illuminated can be set independent from the other, the light emitting period can be prolonged, whereby the brightness of a displayed image can be increased.

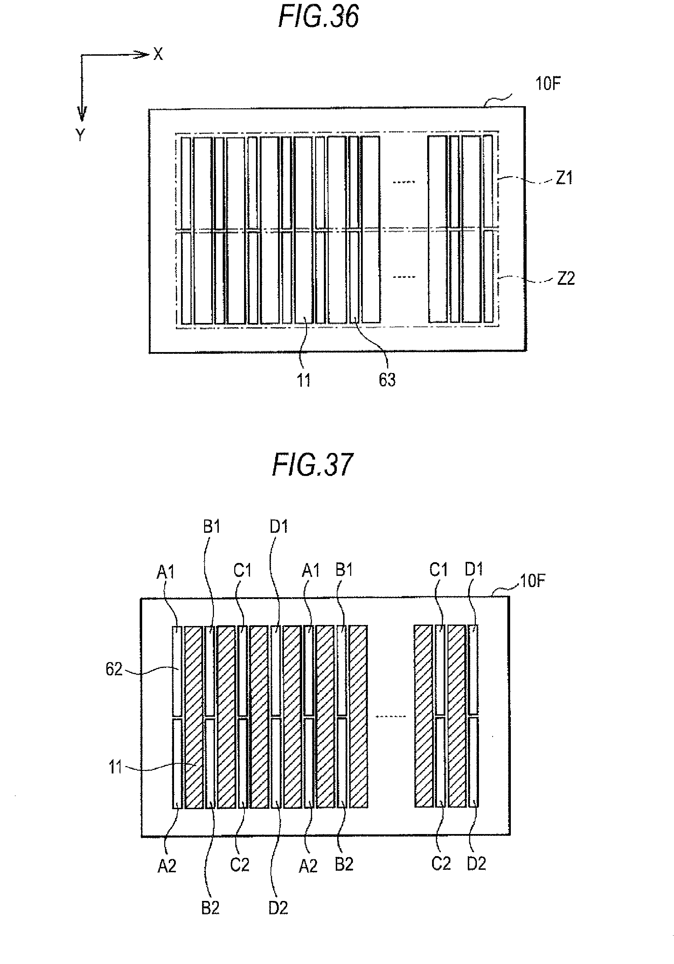

In the stereoscopic display apparatus 1E according to the present variation, the open/close units 12 in the liquid crystal barrier unit 10 may also be divided in the line sequential scan direction (y-axis direction), as shown in Figs. 36 and 37. In this example, the open/close units 12 in the liquid crystal barrier unit 10F are so divided that the divided open/close units 12 correspond to the backlight 30E (Fig. 33A) and the areas Z1 and Z2 of the display unit 20 (Fig. 34), as shown in Fig. 36. The open/close units 12 that belong to the area Z1 form groups A1, B1, C1, and D1, and the open/close units 12 that belong to the area Z2 form groups A2, B2, C2, and D2 as shown in Fig. 37.

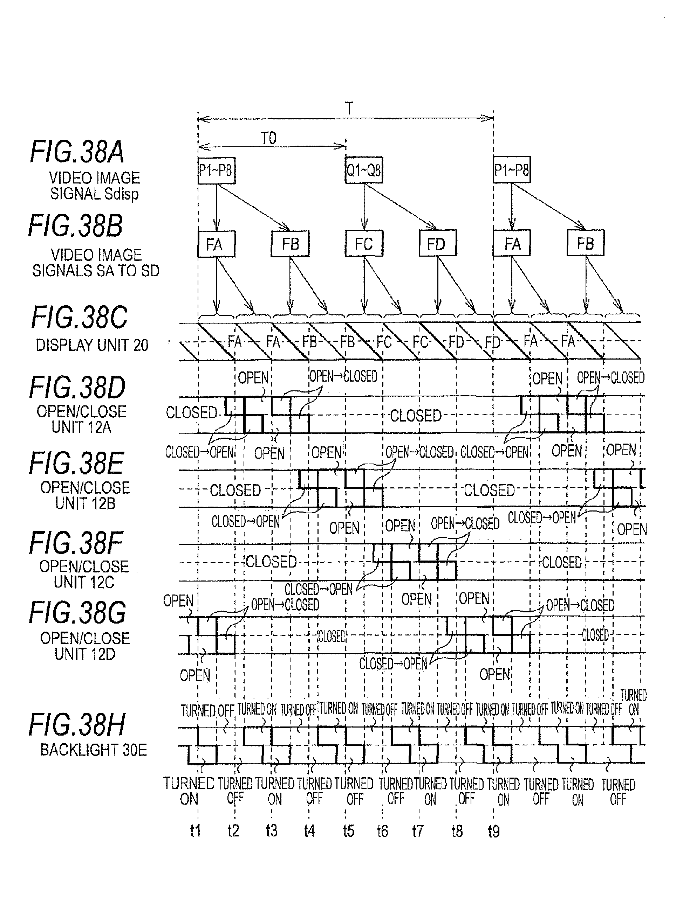

Figs. 38A to 38H are timing charts based on which a stereoscopic display apparatus 1F according to the present variation displays video images. In the stereoscopic display apparatus 1F, not only the backlight 30 but also the open/close units 12 are divided with respect to the line sequential scan direction in the display unit 20, and the divided open/close units 12 are opened or closed independent from each other in synchronization with the scan operation. In this way, even when the open/close units 12 are opened or closed at a slow response speed, the period during which the backlight emits light can be prolonged, whereby the brightness of a displayed image can be increased.

Further, for example, in the embodiments and variations described above, in which the stereoscopic display apparatus is supplied with a video image signal Sdisp containing a plurality of viewpoint video images (six or eight in the embodiments and variations described above), the stereoscopic display apparatus is not necessarily configured this way. For example, the stereoscopic display apparatus may include a multi-viewpoint video image generator that generates a plurality of viewpoint video images based on externally supplied video images. The multi-viewpoint video image generator may generate the plurality of viewpoint video images based, for example, on externally supplied two, right and left, viewpoint video images or an externally supplied single viewpoint video image. A method for generating a plurality of viewpoint video images based on a single video image is, for example, described in http://www.jvc-victor.co.jp/press/2010/3d-movie.html?rss=jvc-victor, which specifically describes an example of how to generate two viewpoint video images.

Further, for example, in the embodiments and variations described above, the combined image generator 45 generates combined frame images based on a plurality of frame images but does not necessarily do so. Instead, the combined image generator 45 may generate combined frame images based on a plurality of frame images having been thinned out as necessary. This approach will be described below with reference to the stereoscopic display apparatus 1 according to the first embodiment described above.

In the stereoscopic display apparatus 1, the combined image generator 45 generates a combined frame image FA based on pixel information disposed in the zero-th column, the fourth column, and other columns of each of the frame images P1 to P8 and generates a combined frame image FB based on pixel information disposed in the first column, the fifth column, and other columns of each of the frame images P1 to P8. That is, pixel information disposed in the second, third, sixth, seventh column, or other columns of each of the frame images P1 to P8 will not be used. In view of this fact, frame images without the pixel information that will not be used may be inputted, and the combined frame images FA and FB may be generated based on the thus formed frame images. Similarly, the combined image generator 45 generates a combined frame image FC based on pixel information disposed in the second column, the sixth column, and other columns of each of the frame images Q1 to Q8 and generates a combined frame image FD based on pixel information disposed in the third column, the seventh column, and other columns of each of the frame images Q1 to Q8. That is, pixel information disposed in the zero-th, first, fourth, fifth columns or other columns of each of the frame images Q1 to Q8 will not be used. In view of this fact, frame images without the pixel information that will not be used may be inputted, and the combined frame images FC and FD may be generated based on the thus formed frame images. This approach reduces the processing burden on the combined image generator 45 and halves the capacity of a frame memory provided in the combined image generator 45 to store frame images.

Further, for example, in the embodiments and variations described above, the display unit 20 is formed of a liquid crystal material but is not necessarily configured this way. Instead, the display unit 20 may be formed, for example, of an EL (electro luminescence) material. When an EL material is used, no backlight is necessary because the EL material forms a self-luminous device.

Further, for example, in the embodiments and variations described above, the liquid crystal barrier unit 10 is formed of a liquid crystal material but is not necessarily configured this way. The liquid crystal barrier unit 10 may alternatively be formed of barriers made of any other suitable material.

Further, for example, in the embodiments and variations described above, the video image supply cycle T0 is set at about 16.7 [msec] (=1/60 [Hz]) but is not limited thereto. For example, the video image supply cycle T0 may be 20 [msec] (=1/50 [Hz]) as described above or any other suitable value.

The present disclosure contains subject matter related to that disclosed in Japanese Priority Patent Application JP 2010-293038 filed in the Japan Patent Office on December 28, 2010, the entire content of which is hereby incorporated by reference.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

It should be understood by those skilled in the art that various modifications, combinations, sub-combinations and alterations may occur depending on design requirements and other factors insofar as they are within the scope of the appended claims or the equivalents thereof.

## Claims

1. A method for driving a stereoscopic display apparatus, the method comprising:
opening or closing a plurality of light barriers grouped into a plurality of barrier groups at different timings among the barrier groups; and
performing display operation based on multi-viewpoint images in synchronization with the open/close operation of the light barriers in each of the barrier groups,
wherein the display operation is performed based on the multi-viewpoint images grouped into a plurality of sets different from one another in a cyclic period in which the light barriers in the plurality of barrier groups are sequentially opened and closed.

2. The method for driving a stereoscopic display apparatus according to claim 1,
wherein the plurality of barrier groups are formed of four barrier groups, and
the display operation is performed based on a first set of multi-viewpoint images and a second set of multi-viewpoint images in the cyclic period.

3. The method for driving a stereoscopic display apparatus according to claim 1,
wherein the plurality of barrier groups are formed of three barrier groups, and
the display operation is performed based on a first set of multi-viewpoint images and a second set of multi-viewpoint images in a first cyclic period, and performed based on the second set of multi-viewpoint images and a third set of multi-viewpoint images in a subsequent second cyclic period.

4. The method for driving a stereoscopic display apparatus according to claim 1,
wherein the plurality of barrier groups are formed of two barrier groups, and
the display operation is performed based on a first set of multi-viewpoint images and a second set of multi-viewpoint images in the cyclic period.

5. The method for driving a stereoscopic display apparatus according to claim 1,
wherein the plurality of light barriers are so arranged that the plurality of barrier groups appear cyclically in a predetermined direction, and
the display operation is performed based on each set of multi-viewpoint images in synchronization with barrier groups to which light barriers that are not adjacent to each other belong.

6. The method for driving a stereoscopic display apparatus according to claim 1,
wherein the plurality of light barriers are so arranged that the plurality of barrier groups appear cyclically in a predetermined direction, and
the display operation is performed based on each set of multi-viewpoint images in synchronization with barrier groups to which light barriers that are adjacent to each other belong.

7. The method for driving a stereoscopic display apparatus according to claim 1,
wherein in the display operation, a plurality of series of combined images corresponding to the barrier groups are generated and displayed based on the plurality of sets of multi-viewpoint images in the cyclic period.

8. A method for driving a stereoscopic display apparatus, the method comprising:
opening or closing a plurality of light barriers grouped into a plurality of barrier groups at different timings among the barrier groups; and
performing display operation based on multi-viewpoint images in synchronization with the open/close operation of the light barriers in each of the barrier groups,
wherein the display operation is performed based on multi-viewpoint images so configured that display in portions corresponding to the light barriers that belong to at least one of the barrier groups differs from display in portions corresponding to the light barriers that belong to the other barrier groups in a cyclic period in which the light barriers in the plurality of barrier groups are sequentially opened and closed.

9. A stereoscopic display apparatus comprising:
a light barrier unit including a plurality of light barriers grouped into a plurality of barrier groups;
a barrier driver that opens or closes the plurality of light barriers at different timings among the barrier groups; and
a display unit that performs display operation based on a plurality of sets of multi-viewpoint images different from one another in a cyclic period in which the light barriers in the plurality of barrier groups are sequentially opened and closed.

10. The stereoscopic display apparatus according to claim 9, wherein the display unit is a liquid crystal display unit,
the stereoscopic display apparatus further comprises a backlight,
and
the liquid crystal display unit is disposed between the backlight and the light barrier unit.

11. The stereoscopic display apparatus according to claim 9, wherein the display unit is a liquid crystal display unit,
the stereoscopic display apparatus further comprises a backlight,
and
the light barrier unit is disposed between the backlight and the liquid crystal display unit.
